# EUROPEAN PATENT SPECIFICATION

(11) **EP 4 236 432 B1**
(45) Date of publication and mention of the grant of the patent: **20.05.2026**
(21) Application number: 20959093.4
(22) Date of filing: 28.10.2020
(51) Int. Cl.: H04W 24/04, H04W 24/02

(54) **MODEL CONFIGURATION METHOD AND APPARATUS**
VERFAHREN UND VORRICHTUNG ZUR MODELLKONFIGURATION
PROCÉDÉ ET APPAREIL DE CONFIGURATION DE MODÈLE

(43) Date of publication of application: 30.08.2023
(73) Proprietor: Huawei Technologies Co., Ltd., Shenzhen, Guangdong 518129 (CN)
(72) Inventor: HU, Xingxing, Shenzhen, Guangdong 518129 (CN); ZENG, Qinghai, Shenzhen, Guangdong 518129 (CN); GENG, Tingting, Shenzhen, Guangdong 518129 (CN); LUO, Haiyan, Shenzhen, Guangdong 518129 (CN)
(74) Representative: MERH-IP Matias Erny Reichl Hoffmann Patentanwälte PartG mbB
(86) International application number: PCT/CN2020/124563
(87) International publication number: WO 2022/087930

(56) References cited:
- WO-A1-2014/126779
- WO-A1-2020/048594
- WO-A1-2020/049346
- CN-A- 102 547 897
- CN-A- 103 124 429
- CN-A- 106 211 098
- CN-A- 108 271 236
- CN-A- 109 314 897
- CN-A- 110 831 042
- CN-A- 110 958 623
- CN-A- 111 148 078
- CN-A- 111 356 161
- US-A1- 2019 349 912

## Description

### TECHNICAL FIELD

Embodiments of this application relate to the field of communication technologies, and in particular, to a model configuration method and an apparatus.

### BACKGROUND

With development of communication technologies and increase of user requirements, a large quantity of terminals in a plurality of forms are gradually used in communication scenarios. For example, in an industrial automation scenario, there are a large quantity of monitoring devices, machines, sensors, or the like in a factory; and in a home and life scenario, there are a large quantity of various types of terminals such as mobile phones, tablets, wearable devices, smart appliances, or vehicle-mounted terminals. To cope with the increasingly complex problems of network planning, network configuration, and resource scheduling in a communication network, an intelligent model is introduced in the communication network.

WO 2014/126779 A1 discloses using machine learning to generate initial classifier models from cloud behavior vectors, and identifying key factors for mobile devices to distinguish between malicious and benign behaviors.

### SUMMARY

Embodiments of this application provide a model configuration method, so as to resolve a problem of resource waste and large air interface overheads caused when a target access network device reconfigures complete information of a model for a terminal when the terminal moves or performs cell handover.

To achieve the foregoing objectives, the following technical solutions are used in embodiments of this application.

According to the invention a model configuration method in accordance with independent claims 1 and 12 and apparatuses in accordance with independent claim 15 are provided. Further aspects of the invention are defined in the appended dependent claims.

In embodiments of this application, that information such as information A indicates another piece of information or feature, for example, information B, may include:
the information A includes the information B;
the information A indicates the information B from one or more pieces of candidate information B, for example, indicates an index of the information B, where each of the one or more pieces of candidate information B corresponds to a unique index used to identify the candidate information B; or
the information A is used to determine the information B, where for example, the information B may be obtained by performing a mathematical operation or filtering on the information A.

Based on the method according to the first aspect, when the first-part information of the first model is sent to the terminal that is in the first cell, if the terminal moves or is handed over to the second cell different from the first cell, the first indication information that indicates remaining information (for example, the second-part information) of the first model is sent, so that a device (for example, an access network device) corresponding to the second cell sends the remaining information of the first model to the terminal located in the second cell. In other words, after the terminal moves or is handed over to a new cell, the remaining information other than the first-part information in information about the first model is sent to the terminal, so as to implement continuous sending, and resending of all the information about the first model to the terminal is not needed, thereby reducing air interface overheads caused by resending the information about the model to the terminal when the terminal moves or performs cell handover.

In a possible design, the sending first indication information includes: sending the first indication information to a second radio control apparatus. The possible design may be performed by the first radio control apparatus.

Based on the possible design, the first indication information may be directly sent to the second radio control apparatus, to reduce a sending delay of the first indication information. In addition, no other intermediate device needs to be introduced, so that a system design is simplified.

In a possible design, the first indication information indicates an end location of the first-part information in the information about the first model; the first indication information indicates a start location of the second-part information in the information about the first model; or the first indication information includes the second-part information, to improve design flexibility of the first indication information.

In a possible design, when a radio control apparatus corresponding to the first cell is the same as that corresponding to the second cell, the first indication information indicates identification information of the terminal; the first indication information indicates identification information of the terminal and a start location of fourth-part information in third-part information, where the third-part information is information obtained from the radio control apparatus, and the fourth-part information is information that is not sent to the terminal and that is in the third-part information; or the first indication information indicates identification information of the terminal and an end location of the first-part information in third-part information, where the third-part information is information obtained from the radio control apparatus.

Based on the possible design, the identification information of the terminal may be indicated to the radio control apparatus, so that the radio control apparatus learns, based on the identification information of the terminal, which terminal in terminals that are in the first cell and that receive the information about the first model performs cell movement or performs cell handover, and continues to send the remaining information, for example, the second-part information, to the terminal that moves or performs cell handover. In addition, the start location of the fourth-part information or a start location of the first-part information is indicated. In this way, the second-part information to be sent to the terminal is effectively and flexibly indicated.

In a possible design, when a radio control apparatus corresponding to the first cell is the same as that corresponding to the second cell, the sending first indication information includes: sending the first indication information to a second access network device serving the second cell; or sending the first indication information to the radio control apparatus, where the first indication information further includes identification information of a second access network device.

Based on the possible design, the first access network device may send the first indication information including the identification information of the second access network device to the radio control apparatus, or the second access network device may send the first indication information to the radio control apparatus, so that the radio control apparatus learns of a cell that corresponds to a specific access network device and in which the terminal that moves or performs cell handover is located, and continues to send the remaining information of the first model to the terminal via the access network device. This implementation is flexible and diversified, and an application scope of the model configuration method provided in embodiments of this application is expanded.

In a possible design, the first cell corresponds to a first radio control apparatus, the second cell corresponds to a second radio control apparatus, and the first radio control apparatus is different from the second radio control apparatus. The sending first indication information includes: sending the first indication information to a second access network device, so that the second access network device learns, based on the first indication information, which information about the first model is not sent to the terminal, and sends, to the terminal, the information that is not sent to the terminal, thereby simplifying a system design.

In a possible design, the first indication information includes the second-part information; the first indication information indicates a start location of the second-part information in the information about the first model; the first indication information indicates an end location of the first-part information in the information about the first model; or the first indication information includes fourth-part information and an end location of third-part information in information about the first model, the fourth-part information is information that is not sent to the terminal and that is in the third-part information, and the third-part information is part information that is of the first model and that is obtained from the first radio control apparatus.

Based on the possible design, the second-part information that is of the first model and that is to be sent to the terminal is effectively and flexibly indicated.

In a possible design, the method further includes: sending packet data convergence protocol PDCP sequence number information corresponding to the second-part information to the second access network device.

Based on the possible design, the second access network device may configure, based on the PDCP sequence number information corresponding to the second-part information, PDCP sequence numbers of data packets corresponding to the second-part information, and send the second-part information to the terminal in an order of the PDCP sequence numbers, so that the terminal reassembles the received data packets based on the PDCP sequence numbers of the data packets to obtain the complete information about the first model, thereby improving transmission accuracy of the information about the first model, and simplifying a system design.

In a possible design, the method further includes: receiving, from the terminal, second indication information that indicates information successfully received by the terminal and/or information not successfully received by the terminal.

According to the method, which information is successfully received by the terminal and which information fails to be received may be learned based on the second indication information, and the information that fails to be received is resent to the terminal, thereby improving information transmission reliability.

In a possible design, the method further includes: sending, to the first radio control apparatus, a first indication message that indicates the terminal to move or be handed over from the first cell to the second cell, and receiving, from the first radio control apparatus, a first end indication that indicates the first radio control apparatus to no longer send information exchanged between the first radio control apparatus and the terminal to a first access network device.

Based on the possible design, signaling exchange with the first radio control apparatus may clearly indicate that the terminal has moved or performed cell handover and moved out of the first cell, and trigger, in a timely manner, the first radio control apparatus to stop sending the information exchanged between the first radio control apparatus and the terminal to the first access network device. This avoids transmission consumption between the first radio control apparatus and the first access network device caused because the first radio control apparatus continues sending the information exchanged between the first radio control apparatus and the terminal to the first access network device. In addition, this avoids transmission consumption between the first access network device and the second access network device caused because the first access network device needs to send more information exchanged between the first radio control apparatus and the terminal to the second access network device. In addition, the first radio control apparatus may send the remaining information to the second access network device in a timely manner after learning that the terminal moves from a cell or is handed over to the second cell. Compared with a manner in which the first radio control apparatus sends the remaining information to the first access network device and then the first access network device sends the remaining information to the second access network device, in this manner, a delay is shorter, and a system design is simplified.

In a possible design, the method further includes: sending a second end indication to the second access network device, where the second end indication indicates to no longer send the information exchanged between the first radio control apparatus and the terminal to the second access network device.

Based on the possible design, signaling exchange with the second access network device may indicate that all information exchanged between the first radio control apparatus and the terminal has been sent to the second access network device, and the information exchanged between the first radio control apparatus and the terminal is no longer sent to the second access network device. In this way, the second access network device is triggered in a timely manner to stop receiving the first indication information, and the second access network device does not need to continuously attempt to receive the first indication information, thereby reducing power consumption of receiving the first indication information by the second access network device.

In a possible design, the first radio control apparatus is included in the first access network device; or the first radio control apparatus and the first access network device are separately deployed.

Based on the possible design, the first radio control apparatus is effectively and flexibly deployed.

In a possible design, the sending first-part information of a first model to a terminal that is in a first cell includes: sending, in a broadcast manner, broadcast information including the first-part information of the first model to the terminal that is in the first cell, and sending, in a unicast manner, unicast information including identification information of the first model to the terminal.

Based on the possible design, the broadcast manner and the unicast manner may be combined, so that a plurality of terminals in the first cell simultaneously receive the information about the first model, thereby increasing a transmission rate of the information about the first model and reducing signaling overheads.

In a possible design, the sending first-part information of a first model to a terminal that is in a first cell includes: sending, to the terminal in a unicast manner, unicast information including the first-part information of the first model and the identification information of the terminal.

Based on the possible design, the first-part information of the first model may be sent, in a unicast manner, to a specific terminal that is in the first cell, to improve transmission reliability of the information about the first model.

In a possible design, the first model is an ML model.

Based on the possible design, application scenarios of embodiments of this application are effectively and flexibly deployed.

### BRIEF DESCRIPTION OF DRAWINGS

FIG. 1a is a schematic diagram of information about a model configured for a terminal according to an embodiment of this application;
FIG. 1b is another schematic diagram of information about a model configured for a terminal according to an embodiment of this application;
FIG. 2 is a simplified schematic diagram of a communication system according to an embodiment of this application;
FIG. 3a is a schematic diagram of an access network device according to an embodiment of this application;
FIG. 3b is a schematic diagram of a protocol stack of an access network device according to an embodiment of this application;
FIG. 3c is a schematic diagram of a protocol stack of an access network device deployed with an RIC layer according to an embodiment of this application;
FIG. 4 is a schematic composition diagram of a communication apparatus according to an embodiment of this application;
FIG. 5 to FIG. 8 are flowcharts of a model configuration method according to an embodiment of this application;
FIG. 9 to FIG. 11 are schematic composition diagrams of a communication apparatus according to an embodiment of this application; and
FIG. 12 is a schematic composition diagram of a communication system according to an embodiment of this application.

### DESCRIPTION OF EMBODIMENTS

To cope with increasingly complex problems such as network planning, network configuration, and resource scheduling in a communication network, and implement a communication network that runs efficiently, an artificial intelligence (artificial intelligence, AI) technology is introduced into the communication network. In the network, the AI technology is used to assist a terminal and/or a network side device to improve efficiency of network planning, network configuration, resource scheduling, and the like, so as to implement intelligence of a radio access network (radio access network, RAN). An objective of the AI technology is to enable a machine to learn, accumulate experience, and resolve problems that humans can resolve through experience, for example, natural language understanding, image recognition, and/or chess playing.

Machine learning (machine learning, ML) is an important technical way to implement AI. Machine learning may include supervised learning, unsupervised learning, and reinforcement learning. A neural network (neural network) is a specific implementation form of machine learning. Machine learning may be considered as a method. The method can grant a learning capability to a machine (for example, a terminal and/or a network side device), so that the machine completes a function that cannot be completed through direct programming.

The following explains and describes related technical features in embodiments of this application. It should be noted that, the explanations and descriptions are intended to facilitate understanding of embodiments of this application, but should not be construed as limiting the protection scope required by embodiments of this application.

A model is a linear or non-linear model that provides a machine learning algorithm. In the machine learning algorithm, a machine may train or learn training data to obtain an AI model. The AI model may be for predicting input data (for example, predicting a service data volume in a future period of time) to obtain a prediction result. In other words, the AI model may reflect a method for performing an operation on the input data of the AI model, for example, represent how to perform a linear or non-linear operation on the input data, to obtain an output result of the AI model. The AI model may be referred to as a model, an intelligent model, an ML model, an AI/ML model, or another name for short. This is not limited. Performing prediction by using the model may also be referred to as performing inference or deciding by using a model, and the prediction result may also be referred to as an inference result or a decision result. When machine learning is implemented by using a neural network, the foregoing AI model may also be referred to as a neural network model.

A neural network (neural network) is a network that includes three types of computing layers: an input layer, a hidden layer, and an output layer. Each layer has one or more logical judgment units, and the logical judgment unit is referred to as a neuron (neuron). Each neuron weights an input value (a corresponding weight value is referred to as a weight) to obtain an output result. It may be considered that the output result is implemented through a linear or non-linear function. For example, the neuron outputs the output result only when the input value of the neuron exceeds a threshold. For example, the information about a neural network model includes a neuron included in each computing layer, a weighting coefficient of each neuron, and a connection relationship between neurons at adjacent computing layers.

The neural network may include a deep neural network (deep neural network). The deep neural network is a neural network having a plurality of hidden layers, and a terminal and/or a network side device may perform deep learning (deep learning) via the deep neural network.

In a communication system, if the terminal needs to implement intelligence of network planning, network configuration, and/or resource scheduling by using an AI technology, the network side device may send information about an intelligent model to the terminal. After receiving the information about the intelligent model, the terminal performs inference or federated learning by using the intelligent model, to implement an intelligent network function such as network planning, network configuration, and/or resource scheduling. The information about the intelligent model may include a large quantity of parameters, the model is relatively large, and a relatively high downlink data rate is required for sending the information about the intelligent model to the terminal.

For example, the following Table 1 shows information about neural network models used for image recognition, for example, an Alex network (AlexNet), a visual geometry group 16 (VGG16), a deep residual network-152 (ResNet-152), a deep residual network-50 (ResNet-50), a Google network (GoogleNet), an inception-V3 (Inception-V3), and a 1.0 mobile network-224 (1.0 MobileNet-224). It can be learned from Table 1 that each neural network model includes millions of parameters. When each parameter included in the neural network model is represented by using 32 bits (bits), a size (namely, a total parameter of the neural network model) of the neural network model occupies hundreds of megabytes (megabytes, MBytes), and a downlink data rate required for transmitting the neural network model is hundreds of megabits per second (Mbit/s, Mbps) or even thousands of Mbps.

**Table 1**

| Neural network model | Quantity of parameters (unit: million) | Each parameter is represented by using 32 bits | | Each parameter is represented by using 8 bits | |
|---|---|---|---|---|---|
| | | Model size (unit: MByte) | Required downlink data rate (unit: Mbps) | Model size (unit: MByte) | Required downlink data rate (unit: Mbps) |
| AlexNetA | 60 | 240 | 1920 | 60 | 480 |
| VGG16 | 138 | 552 | 4416 | 138 | 1104 |
| ResNet-152 | 60 | 240 | 1920 | 60 | 480 |
| ResNet-50 | 25 | 100 | 800 | 25 | 200 |
| GoogleNet | 6.8 | 27.2 | 217.6 | 6.8 | 54.4 |
| Inception-V3 | 23 | 92 | 736 | 23 | 184 |
| 1.0 MobileNet-224 | 4.2 | 16.8 | 134.4 | 4.2 | 33.6 |

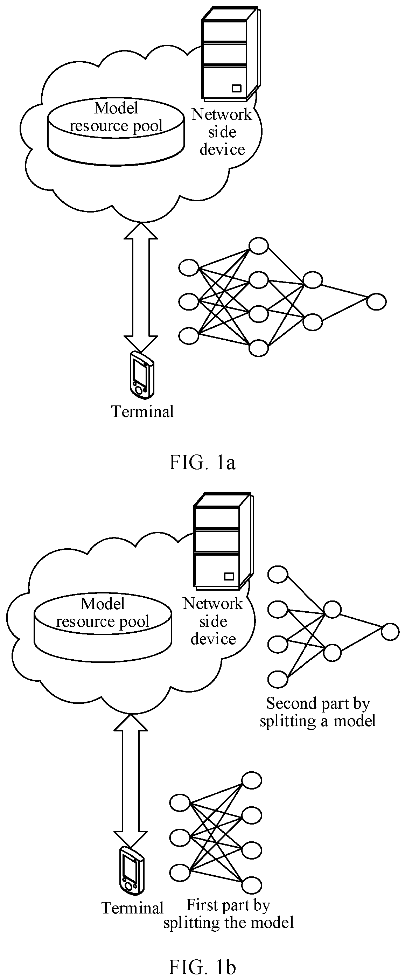

In a possible implementation, as shown in FIG. 1a, the network side device may send a complete intelligent model to the terminal. After receiving the complete intelligent model, the terminal obtains a prediction result based on the intelligent model, and performs corresponding data processing based on the prediction result. In another possible design, as shown in FIG. 1b, the network side device splits the intelligent model, and sends, to the terminal, a first part obtained by splitting the intelligent model. The terminal performs processing based on the partial intelligent model, and sends a processing result (also referred to as intermediate data) to the network side device. The network side device executes a second part of the intelligent model based on the processing result. That is, the terminal side and the network side device perform data processing by using the intelligent model in collaboration, to reduce a processing burden of the terminal.

In a process in which the method shown in FIG. 1a or FIG. 1b is used to send the information about the intelligent model to the terminal, if the terminal moves and is handed over from one cell to another cell, a target access network device cannot learn how much information about the intelligent model has been sent by a source access network device to the terminal. In this case, the target access network device considers, by default, that the information that is about the intelligent model and that is sent by the source access network device is invalid, and the target access network device resends the information about the intelligent model to the terminal from the beginning again. Consequently, repeated information is sent to the terminal, and radio air interface resources are wasted.

To resolve the foregoing problem, an embodiment of this application provides a model configuration method. The method includes: sending, to a terminal that is in a first cell, first-part information of a first model used by the terminal to process data, and sending first indication information that indicates second-part information of the first model, where the second-part information is information to be sent to the terminal when the terminal is located in a second cell. According to the method, the target access network device only needs to send the second-part information to the terminal, and the target access network device does not need to send information about the first model to the terminal from the beginning, to avoid a problem of a waste of radio air interface resources caused by sending the repeated information about the first model to the terminal, and improve utilization of radio air interface resources.

In each of embodiments of this application, the first model may be used by the terminal to process data (or assist the terminal in processing data), to implement or assist in implementing an objective or a function. For example, the first model may be used by the terminal to perform (or assist the terminal in performing) the following processing on data: inference, model training, mathematical statistics, data classification, federated learning (federated learning), support vector machine (support vector machine, SVM) learning, or the like, to implement or assist in implementing one or more of the following network functions: radio access technology (radio access technology, RAT) selection, load balancing, network energy saving, coverage optimization, traffic control, scheduling, channel coding, channel decoding, mobility management, traffic forecasting, modulation, demodulation, and the like. Specifically, the first model may be one or more of the AI model, the ML model, and the neural network model, or may be another intelligent model that assists the terminal in processing data. This is not limited.

In each of embodiments of this application, the information about the first model may include one or more of the following: identification information of the first model, configuration information of the first model, an application scope of the first model, information about valid time of the first model, and the like. The following describes the identification information of the first model, the configuration information of the first model, the application scope of the first model, and the information about the valid time of the first model.

The identification information of the first model may uniquely identify the first model. The identification information of the first model may be an identifier (identifier, ID) or a name that uniquely identifies the first model. The identification information of the first model may further indicate a function or purpose of the first model. For example, the identification information of the first model may indicate that the first model has one or more of the following network functions: radio access technology (radio access technology, RAT) selection, load balancing, mobility management, network energy saving, coverage optimization, flow control, scheduling, channel coding, channel decoding, modulation, demodulation, and channel state information (channel state information, CSI) feedback. The CSI feedback may include CSI compression and reporting of compressed CSI.

The configuration information of the first model may include a model parameter (model parameter) of the first model, a model hyperparameter (model hyperparameter) of the first model, and/or an algorithm of the first model. Optionally, the model hyperparameter may be classified into a model parameter. The following explains and describes the model parameter of the first model, the model hyperparameter of the first model, and the algorithm of the first model.

The model parameter of the first model is a configuration variable in the model. A value of the model parameter can be obtained through data estimation. The model parameter of the first model has one or more of the following features: The model parameter is required when the first model performs training or inference, a value of a model parameter of an available model is determined, the model parameter is learned through data estimation or data learning, the model parameter is usually not manually set by a programmer, and the model parameter is usually stored as a part of the first model. For example, the model parameter may be one or more of the following: a weight (namely, a weighting coefficient for an input value) in a neural network, an excitation function (namely, an operation function on a neuron in a neural network), a topology (namely, a quantity of layers of a neural network, a quantity of neurons at each layer, and/or a relationship between neurons of layers) in the neural network, a support vector in a support vector machine, a coefficient in linear regression, and a coefficient in logistic regression.

The model hyperparameter of the first model is a configuration outside the model, and a value of the model hyperparameter cannot be obtained through data estimation. The model hyperparameter of the first model has one or more of the following features: The model hyperparameter is usually applied to a process of estimating the model parameter, the model hyperparameter is usually directly specified by a practitioner, the model hyperparameter may be generally set by using a heuristic method, and the model hyperparameter is usually adjusted based on a given predictive modeling problem. For example, a learning rate of a training neural network, a penalty parameter C and a sigma hyperparameter of a support vector machine, or k in k-nearest neighbors may be referred to as a model hyperparameter.

The algorithm of the first model is an algorithm that needs to be used when a network element (for example, a terminal) that performs training or inference performs training or inference. The algorithm that needs to be used to perform training or inference may include but is not limited to a Q-learning algorithm. A core of the Q-learning algorithm is a Q table. A row and a column of the table represent a state (state) and an action (action) respectively. The Q table stores an expectation (referred to as a Q value) of a reward that can be obtained by using a corresponding action in each state. It is assumed that the Q table includes m states and n actions, and a size of the Q table is m*n.

For inference performed by using the Q-learning algorithm, a network element (for example, a terminal) that performs inference by using Q-learning first determines a current state, searches for a Q value corresponding to the current state, selects an action with a maximum Q value, completes an inference process, enters a next state, and performs inference by using a similar method. That is, for inference, an input parameter of the Q-learning algorithm is initial content in the Q table.

For training performed by using the Q-learning algorithm, a network element (for example, a terminal) that performs training by using Q-learning calculates an optimal Q value by exploring and updating Q values of the Q table for a plurality of times. The network element may use a specific algorithm to update the Q values of the Q table. For example, when the network element is in S0 state, the network element selects action A0. The network element then enters S1 state, and updates a Q value corresponding to S0 state and action A0. For example, the following formula may be used to update the Q value corresponding to S0 state and action A0: Q(S0, A0)_new=Q(S0, A0)_old+a*(Q(S0, A0)_target-Q(S0, A0)_old). Q(S0, A0)_new is an updated Q value corresponding to S0 state and action A0, and Q(S0, A0)_old is the Q value corresponding to S0 state and action A0 before the update. Q(S0, A0)_target=R(S1)+y*max{Q(S1, b)}, where R(S1) is a reward that can be obtained when the network element enters S1 by using action A0 in S0 state, y is an attenuation value, max{Q(S1, b)} is a maximum Q value of Q values corresponding to all possible actions in S1 state, and "a" is a learning rate. That is, the input parameter of the Q-learning algorithm is the initial content in the Q table and values of R(.), y, and a, where R(.) is a reward that can be obtained by the network element.

In embodiments of this application, the application scope of the first model indicates or determines a scope in which the terminal can use the first model. The application scope of the first model may include public land mobile network (public land mobile network, PLMN) list information, and/or cell list information, for example, include a physical cell identifier (physical cell identifier, PCI) or a cell group identifier (cell group identifier, CGI). The terminal can use the first model only when a cell on which the terminal camps or to which the terminal is connected belongs to the application scope of the first model.

In embodiments of this application, the information about the valid time of the first model indicates or determines valid duration of the information about the first model, namely, a period of time in which the information about the first model is valid. The information about the first model is invalid and unavailable beyond the time.

The following describes the model configuration method provided in embodiments of this application with reference to the accompanying drawings in this specification.

The model configuration method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The model configuration method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), device-to-device (device to device, D2D), vehicle to everything (vehicle to everything, V2X), vehicle to vehicle (vehicle to vehicle, V2V), and an internet of things (internet of things, IoT).

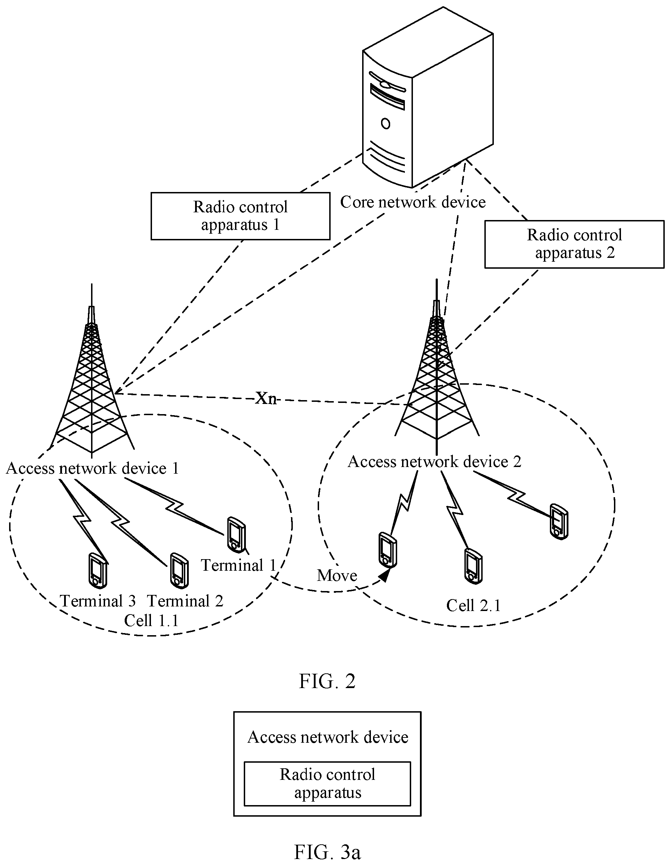

The following uses only a communication system shown in FIG. 2 as an example to describe the model configuration method provided in embodiments of this application.

FIG. 2 is a schematic diagram of a communication system according to an embodiment of this application. As shown in FIG. 2, the communication system may include a radio control apparatus, an access network device, and a plurality of terminals. Access network devices communicate with each other in a wired or wireless manner, for example, communicate with each other through an Xn interface in FIG. 2. The access network device may cover one or more cells. For example, an access network device 1 covers a cell 1.1, and an access network device 2 covers a cell 2.1. The terminal may camp on one of the cells and access a network, and enter a connected state. The radio control apparatus may generate an intelligent model, for example, an AI model or an ML model, and exchange information about the intelligent model with the terminal via an access network device corresponding to the cell on which the terminal camps.

The following describes network elements or devices in the communication system shown in FIG. 2.

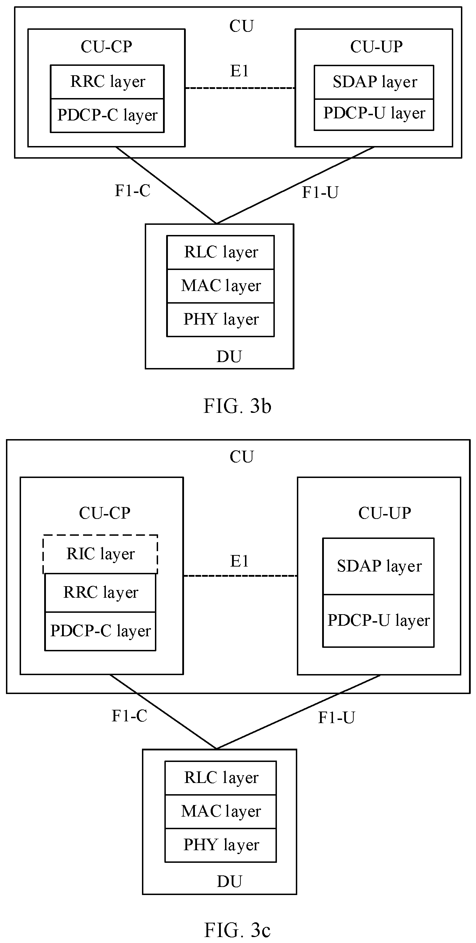

The radio control apparatus may be referred to as a radio intelligent control/controller (radio intelligence control/controller, RIC), an AI apparatus, or the like. A name of the radio control apparatus is not limited in embodiments of this application. The radio control apparatus may implement one or more of AI functions (such as model training and/or inference), intelligent model generation/configuration, and/or exchange of the information about the intelligent model with the terminal. Optionally, the radio control apparatus may further configure the terminal and/or the access network device to collect data, perform model training, and/or perform inference by using the model. The collected data may be used by the radio control apparatus to perform model training and/or inference. Optionally, the radio control apparatus may further release information about the model to the terminal and/or the access network device, and/or release an inference result, and the like. The radio control apparatus can perform model training or model update training by using the data based on a machine learning algorithm, to obtain the corresponding intelligent model. A deployment location of the radio control apparatus is not limited in embodiments of this application. The radio control apparatus may be deployed outside the access network device, for example, deployed in an entity (for example, a cloud server or a core network device) outside the access network device, and establishes a connection to the access network device through wired or wireless communication link. For example, as shown in FIG. 2, a wireless communication apparatus 1 is deployed outside the access network device 1, and the wireless communication apparatus 1 and the access network device 1 may be connected through a wireless communication link. Alternatively, the radio control apparatus may be deployed in the access network device, as shown in FIG. 3a. A product form of the radio control apparatus is not limited in embodiments of this application. The radio control apparatus may be a physical component/device, a functional module in the physical component/device, a chip system, or a protocol layer. This is not limited. When the radio control apparatus is a protocol layer, a manner in which the radio control apparatus is deployed in the access network device may be shown in FIG. 3c.

The terminal may be terminal equipment (terminal equipment), user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a smart home, a vehicle-mounted terminal, or the like. In embodiments of this application, an apparatus configured to implement a function of the terminal may be a terminal, or may be an apparatus, for example, a chip system, that can support the terminal in implementing the function. The apparatus may be mounted in the terminal device or used together with the terminal. The following describes the model configuration method provided in embodiments of this application by using an example in which the apparatus configured to implement the function of the terminal is a terminal.

The access network device is configured to implement at least one of resource scheduling, radio resource management, and radio access control of the terminal. Specifically, the access network device may include a base station, a radio access point, a transmission reception point (transmission receive point, TRP), a transmission point (transmission point, TP), a next-generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), and any node in another access node. In embodiments of this application, an apparatus configured to implement a function of the access network device may be an access network device, or may be an apparatus, for example, a chip system, that can support the access network device in implementing the function. The apparatus may be mounted in the access network device or used together with the access network device. In the technical solutions provided in embodiments of this application, the technical solutions provided in embodiments of this application are described by using an example in which the apparatus configured to implement the function of the access network device is an access network device.

In a network structure, the access network device in FIG. 2 may include a central unit (central unit, CU) and a distributed unit (distributed Unit, DU). For example, functions of the access network device are split, some functions of the access network device are deployed on one CU, and remaining functions are deployed on a DU. A plurality of DUs share one CU, so that costs can be reduced and network expansion is easy. As shown in FIG. 3b, the CU and the DU may be separated based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed on the CU, and a radio link control (radio link control, RLC) layer, a media access control (media access control, MAC) layer, and a physical (physical, PHY) layer are deployed on the DU. The CU is connected to the DU through an F1 interface. The CU may represent the access network device and is connected to a core network through an NG interface, or the CU may represent the access network device and is connected to another access network device through an Xn interface, or the CU may represent the access network device and is connected to another access network device through an X2 interface to perform a dual-connectivity operation.

Further, as shown in FIG. 3b, the CU may be divided into a CU-control plane (CU-control plane, CU-CP) and a CU-user plane (CU-user plane, CU-UP). The CU-CP is responsible for a control plane function, and mainly includes an RRC layer and a PDCP layer (such as a PDCP-C layer) corresponding to a control plane. The CU-UP is responsible for a user plane function, and mainly includes an SDAP layer and a PDCP layer (such as a PDCP-U layer) corresponding to a user plane. The CU-CP is connected to the CU-UP through an E1 interface. The CU-CP may represent the access network device and is connected to the core network through an NG interface. The CU-UP may be connected to the DU through an F1 interface control plane (namely, F1-C), and may be connected to the DU through an F1 interface user plane (namely, F1-U).

When the radio control apparatus is deployed in the access network device, and the access network device has the CU-DU separation protocol stack shown in FIG. 3b, the radio control apparatus may be deployed in the access network device by using a protocol layer (for example, an RIC layer) as an example. The RIC layer is responsible for exchanging information with the terminal to implement an AI function. Specifically, as shown in FIG. 3c, the RIC layer may be a control plane protocol layer logically deployed above the RRC layer. Alternatively, the RIC layer may be a protocol layer logically deployed above the PDCP layer. For example, the RIC layer may be deployed between the PDCP-U layer and the SDAP layer, or may be deployed together with the SDAP layer on the PDCP-U layer, or may be deployed between the PDCP-C layer and the RRC layer, or may be deployed together with the RRC layer on the PDCP-C layer, or the RIC layer may be an RRC layer, or the RIC layer is located above another protocol layer of the access network device. This is not limited.

It should be noted that, the names of the network elements, the names of the interfaces between the network elements, and the names of the protocol stacks that are in the architecture in FIG. 2 are merely examples. In specific implementation, the network elements, the interfaces between the network elements, and the protocol stacks can have other names. This is not specifically limited in embodiments of this application. FIG. 2 is merely an example framework diagram. A quantity of nodes, a quantity of cells, and a status of a terminal included in FIG. 2 are not limited. In addition to the functional nodes shown in FIG. 2, another node may be further included. For example, a core network device may be further included. This is not limited. The access network device and the core network device communicate with each other in a wired or wireless manner, for example, communicate with each other through a next generation (next generation, NG) interface.

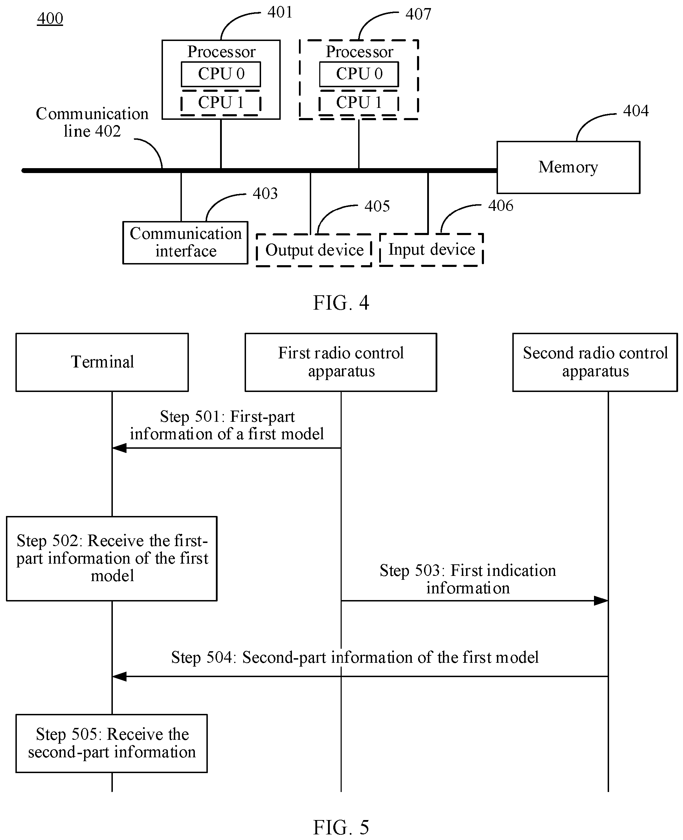

During specific implementation, the network elements shown in FIG. 2, for example, the terminal and the access network device, may use a composition structure shown in FIG. 4 or include components shown in FIG. 4. FIG. 4 is a schematic structural diagram of a communication apparatus 400 according to an embodiment of this application. When the communication apparatus 400 has a function of the terminal in embodiments of this application, the communication apparatus 400 may be a terminal or a module, a circuit, a chip, or a system-on-a-chip in the terminal. When the communication apparatus 400 has a function of the access network device in embodiments of this application, the communication apparatus 400 may be an access network device, or a module, a circuit, a chip, or a system-on-a-chip in the access network device.

As shown in FIG. 4, the communication apparatus 400 may include a processor 401, a communication line 402, and at least one communication interface 403. Further, the communication apparatus 400 may include a memory 404. The processor 401, the memory 404, and the communication interface 403 may be connected to each other through the communication line 402.

The processor 401 may be a central processing unit (central processing unit, CPU), a general-purpose network processor (network processor, NP), a digital signal processor (digital signal processor, DSP), a microprocessor, a microcontroller, a programmable logic device (programmable logic device, PLD), or any combination thereof. The processor 401 may alternatively be any other apparatus having a processing function, for example, a circuit, a component, or a software module.

The communication line 402 is configured to transmit information between the components included in the communication apparatus 400.

The communication interface 403 is configured to communicate with another device or another communication network. The communication interface 403 may be any apparatus such as a transceiver, for example, may be an Ethernet interface, a radio access network (radio access network, RAN) interface, a wireless local area network (wireless local area network, WLAN) interface, a transceiver, a pin, a bus, a transceiver circuit, or any apparatus that can implement communication.

The memory 404 is configured to store instructions. The instructions may be a computer program.

The memory 404 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 404 may exist independently of the processor 401, and is coupled to the processor 401 through the communication line 402. Alternatively, the memory 404 may be integrated with the processor 401. The memory 404 may be configured to store instructions, program code, some data, or the like. The memory 404 may be located inside the communication apparatus 400, or may be located outside the communication apparatus 400. This is not limited. When executing the instructions stored in the memory 404, the processor 401 may implement the model configuration method provided in the following embodiments of this application.

The computer-executable instructions in embodiments of this application may alternatively be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an example, the processor 401 may include one or more CPUs, for example, CPU 0 and CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and/or an input device 406. The output device 405 is coupled to the processor 401, and may display information in a plurality of manners. The input device 406 is coupled to the processor 401, and may receive an input from a user in a plurality of manners. For example, the input device 406 is a device such as a keyboard, a mouse, a microphone, or a joystick, and the output device 405 is a device such as a display screen or a speaker (speaker).

The communication apparatus 400 may be a desktop computer, a portable computer, a network server, a mobile phone, a tablet computer, a wireless terminal, an embedded device, a wearable device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In this embodiment of this application, the chip system may include a chip, or may include a chip and another discrete component.

The following describes, with reference to the communication system shown in FIG. 2, the model configuration method provided in embodiments of this application. Each device in the following embodiments may have the components shown in FIG. 4. In addition, actions, terms, and the like in each of embodiments of this application may be mutually referenced. This is not limited. Names of messages exchanged between devices, names of parameters in the messages, or the like in embodiments of this application are merely examples, and other names may also be used during specific implementation. This is not limited. For example, a "first model" in the following embodiment may be replaced with an "intelligent model".

FIG. 5 is a flowchart of a model configuration method according to an embodiment of this application. In the method shown in FIG. 5, a first radio control apparatus sends first-part information of a first model to a terminal that is in a first cell, and when the terminal moves or is handed over to a second cell, indicates remaining second-part information that is in information about the first model to a second radio control apparatus, so that the second radio control apparatus sends the remaining second-part information to the terminal based on an indication of the first radio control apparatus. It should be noted that, if the first radio control apparatus is deployed in a first access network device, the first radio control apparatus in the steps shown in FIG. 5 may be replaced with the first access network device. If the second radio control apparatus is deployed in a second access network device, the second radio control apparatus in FIG. 5 may be replaced with the second access network device. As shown in FIG. 5, the method may include the following steps.

Step 501: The first radio control apparatus sends the first-part information of the first model to the terminal that is in the first cell.

The first cell may be any cell in FIG. 2, and the terminal may be any terminal in the first cell. The terminal may be in a radio resource control_connected (RRC_connected) state or a radio resource control_inactive (RRC_inactive) state. The first radio control apparatus may be a radio control apparatus corresponding to the first cell, and can configure an intelligent model for the terminal that is in the first cell. The first radio control apparatus may be independently deployed outside the first access network device, or may be deployed in the first access network device. The first access network device is an access network device serving the first cell.

For example, it is assumed that a terminal 1 in a cell 1.1 may perform data processing by using the first model, for example, perform inference, model training, mathematical statistics, data classification, federated learning (federated learning), or support vector machine (support vector machine, SVM) learning. A radio control apparatus 1 corresponds to the cell 1.1. In this case, the radio control apparatus 1 may send information about the first model to the terminal 1 that is in the cell 1.1, that is, release the first model to the terminal 1, so as to configure the first model for the terminal 1. When performing data processing by using the first model, the terminal 1 may input data into the first model for one or more of the foregoing processing, to implement or assist in implementing one or more of the following network functions: network planning, resource scheduling, RAT selection, load balancing, network energy saving, coverage optimization, traffic control, scheduling, channel coding, channel decoding, mobility management, traffic prediction, modulation, demodulation, and the like.

In embodiments of this application, before the first radio control apparatus sends the information about the first model to the terminal that is in the first cell, the first radio control apparatus may further perform information exchange (for example, signaling exchange) with the terminal that is in the first cell, to determine that the terminal in the first cell needs the first model. For example, the terminal sends an initialization message to the first radio control apparatus, where the initialization message indicates that the terminal needs to process data by using the first model. The first radio control apparatus receives the initialization message, and determines that the terminal needs to process data by using the first model. Alternatively, the first radio control apparatus sends, to the terminal, a request message used to request a capability of the terminal. The terminal receives the request message, and sends the capability information of the terminal to the first radio control apparatus. When the capability information of the terminal indicates that the terminal supports processing data by using the first model, the first radio control apparatus determines that the terminal needs to process data by using the first model.

The first model is referred to as an intelligent model. The first model may include but is not limited to one or more of an AI model, an ML model, or a neural network model, and may further include another intelligent model that assists the terminal in processing data, or the like. Specifically, related descriptions of the first model are shown above, and details are not described again.

The first-part information of the first model may include information that is in the information about the first model and that has been sent to the terminal. In embodiments of this application, the information about the first model is not limited to including one or more of the following: identification information of the first model, all information or part information in configuration information of the first model, an application scope of the first model, information about valid time of the first model, and the like. In addition, the information about the first model may further include some information (for example, the initialization message or the request message) that is exchanged between the first radio control apparatus and the terminal in the first cell before the first radio control apparatus sends the information about the first model to the terminal, or may include some other information related to sending of the first model. This is not limited. Related descriptions of the identification information of the first model, the configuration information of the first model, the application scope of the first model, and the information about the valid time of the first model are shown above, and details are not described again.

For example, the first radio control apparatus may send, in the following manner (1.1) or manner (1.2), the first-part information of the first model to the terminal that is in the first cell.

### Manner (1.1): Broadcast manner+unicast manner

For example, the first radio control apparatus generates broadcast information, and broadcasts the information to the first cell, where the broadcast information includes information about one or more models and identification information corresponding to the one or more models, and the one or more models may include the first model. The first radio control apparatus generates unicast information, and sends the unicast information to the terminal that is in the first cell, where the unicast information includes the identification information of the first model, and the unicast information may also be referred to as a dedicated message of the terminal.

Correspondingly, the terminal in the first cell receives the broadcast information and the unicast information, obtains, through parsing, the identification information that is of the first model and that is included in the unicast information, and obtains the first-part information of the first model from the broadcast information based on the identification information of the first model.

In Manner (1.1), the first radio control apparatus may send the broadcast information and the unicast information via the first access network device. For example, the first radio control apparatus may send the broadcast information and the unicast information to the first access network device, and the first access network device receives the broadcast information and the unicast information, and sends the broadcast information and the unicast information.

Alternatively, in Manner (1.1), the first radio control apparatus may send the first-part information of the first model to the first access network device, and the first access network device generates the broadcast information and the unicast information, and sends the generated broadcast information and the generated unicast information to the terminal.

In embodiments of this application, that the first access network device sends the broadcast information and the unicast information may include: The first access network device sends the broadcast information and the unicast information through a data radio bearer (data radio bearer, DRB) or a signaling radio bearer (signaling radio bearer, SRB). That the first access network device sends the broadcast message and the unicast message through a DRB or an SRB may also be described as follows: The first access network device carries the broadcast information and the unicast information in the DRB or the SRB for sending. For example, the first radio control apparatus is the RIC in FIG. 3c. The RIC may generate the broadcast information and the unicast information, perform RRC and PDCP-C processing on the generated broadcast information and the generated unicast information, and then deliver processed broadcast information and processed unicast information to a DU. The DU carries the broadcast information and the unicast information in the DRB for sending. For another example, when the first radio control apparatus is located in a DU of the first access network device, the DU may send the information about the first model to a CU of the first access network device, and then the CU carries the information about the first model in the SRB and sends the SRB to the terminal.

### Manner (1.2): Unicast manner

For example, the first radio control apparatus generates unicast information, and sends the unicast information to the terminal that is in the first cell, where the unicast information includes the first-part information of the first model. Correspondingly, the terminal in the first cell receives the unicast information, and obtains, through parsing, the first-part information that is of the first model and that is included in the unicast information.

It should be noted that although names of the unicast information in Manner (1.1) and Manner (1.2) are the same, content included in the unicast information in different manners is actually different.

In Manner (1.2), the first radio control apparatus may send the unicast information via the first access network device. For example, the first radio control apparatus may send the unicast information to the first access network device, and the first access network device receives the unicast information and sends the unicast information. Alternatively, in Manner (1.2), the first radio control apparatus may send the first-part information of the first model to the first access network device, and the first access network device generates the unicast information, and sends the generated unicast information.

In Manner (1.2), that the first access network device sends the unicast information may include: The first access network device sends the unicast information through a DRB or an SRB. For example, the first radio control apparatus is the RIC in FIG. 3c. The RIC may generate the unicast information, perform RRC and PDCP-C processing on the generated unicast information, and then deliver processed unicast information to a DU. The DU carries the unicast information in the DRB and sends the DRB to the terminal.

Optionally, in Manner (1.2), in addition to sending the information about the first model to the terminal, the first radio control apparatus may further allocate identification information of the terminal to the terminal, and may send the identification information to the terminal through the unicast information. For example, the unicast information in Manner (1.2) further includes an identification message of the terminal, other information, and the like. The unicast information may be referred to as a dedicated message of the terminal. It should be noted that, the identification information of the terminal in this embodiment of this application may alternatively be sent to the terminal by the first radio control apparatus in a process of information exchange between the first radio control apparatus and the terminal. This is not limited.

In embodiments of this application, the identification information of the terminal may be used to identify the terminal. The identification information of the terminal may be an internet protocol (internet protocol, IP) address of the terminal, a media access control (media access control, MAC) address of the terminal, an international mobile subscriber identity (international mobile subscriber identity, IMSI) of the terminal, a cell radio network temporary identifier (cell radio network temporary identifier, C_RNTI) of the terminal, an inactive radio network temporary identifier (inactive radio network temporary identifier, I RNTI) of the terminal, or the like.

Because the first-part information of the first model is relatively large, when the first radio control apparatus or the first access network device sends the information about the first model to the terminal, the first radio control apparatus or the first access network device may first process the information about the first model into a form shown in the following (2.1) or (2.2), and then send the information to the terminal in the foregoing Manner (1.1) or Manner (1.2).

### (2.1) Data packet form

For example, the first radio control apparatus or the first access network device may divide the information about the first model into a plurality of pieces of information, and separately pack the plurality of pieces of information into a plurality of data packets. For example, a data packet may be a PDCP data packet, and one data packet corresponds to one piece of information. Sizes of information carried in different data packets may be the same or different. A data packet may further carry third indication information, and the third indication information indicates a location, in the information about the first model, of information carried in the data packet.

Further, the first radio control apparatus or the first access network device sends the generated data packets in the foregoing Manner (1.1) or Manner (1.2).

The third indication information may be a sequence number of the data packet, an offset value between a start location of the information carried in the data packet and a start location of the information about the first model, an offset value between a start location of the information carried in the data packet and an end location of the information about the first model, or the like.

### (2.2) Message format

For example, the first radio control apparatus or the first access network device may divide the information about the first model into one or more pieces of information, and sequentially include the one or more pieces of information in one message. The message may be referred to as a long message. Subsequently, the long message is referred to as a first message. The first message may carry a sequence number.

If a length of the first message is less than a maximum information length that can be transmitted over an air interface between the first access network device and the terminal, the first radio control apparatus or the first access network device sends the first message to the terminal. The first message may carry fourth indication information, and the fourth indication information indicates that the first message is a long message. When the terminal receives the fourth indication information, the terminal can learn that a currently received message is the entire first message.

If a maximum information length that can be transmitted over an air interface between the first access network device and the terminal is less than a length of the first message, the first radio control apparatus or the first access network device divides the first message into a plurality of short messages, and sends the plurality of short messages to the terminal in the foregoing Manner (1.1) or Manner (1.2), and sends one or more short messages each time.

Each short message includes part information of the first model, and each short message further includes fifth indication information. The fifth indication information indicates a location of the short message in the first message. For example, the fifth indication information may include a number, a sequence number, an offset value from a start location of the first message, or the like corresponding to the short message. The fifth indication information may further indicate that the short message is a message obtained by dividing the first message (which is also described as that information carried in the short message is part information of the information carried in the first message). Optionally, the fifth indication information may further indicate whether the short message is the last short message obtained by dividing the first message. When the terminal receives the fifth indication information, the terminal can learn that a currently received message is a short message corresponding to the first message, and know whether there is another short message of the first message subsequently.

Optionally, the fourth indication information and the fifth indication information may correspond to same indication information, but the indication information corresponds to different values in different cases.

Further, the first radio control apparatus may further receive second indication information returned by the terminal, where the second indication information indicates information successfully received by the terminal and/or information not successfully received by the terminal. The method may be used when a transmission error or packet loss occurs during transmission. The first radio control apparatus may perform retransmission based on information that is fed back by the terminal and that is not correctly received, and continue to retransmit the incorrectly transmitted information or the discarded information to the terminal. It should be noted that, for the foregoing (2.1), the information herein refers to a data packet; and for the foregoing (2.1), the information herein refers to a long message or a short message.

Step 502: The terminal receives the first-part information of the first model.

For example, the terminal may receive the first-part information of the first model through the SRB or the DRB.

Further, the terminal stores the received first-part information of the first model. For example, the terminal may record the first-part information of the first model in a variable of the terminal, and may further record sixth indication information in the variable. The sixth indication information may indicate that the first-part information of the first model is received from the first cell. The sixth indication information may be a cell identifier of the first cell. The cell identifier of the first cell may be used to uniquely identify the first cell, and the cell identifier of the first cell may be a PCI, a cell global identifier (cell global identifier, CGI), or the like of the first cell. Specifically, how the terminal stores the variable is not limited in this embodiment of this application.

In a process in which the terminal receives the information about the first model (for example, at an end moment of receiving the first-part information by the terminal), the terminal may move or perform cell handover. For example, the terminal may move in a radio resource control_connected (RRC_connected) state, or the terminal may perform RRC reestablishment in an RRC _connected state, and move or be handed over from the first cell to the second cell; or the terminal moves in a radio resource control_inactive (RRC_inactive) state, and moves or is handed over from the first cell to the second cell, where the second cell is different from the first cell. For example, the terminal is the terminal 1 in FIG. 2, and the terminal 1 may move or be handed over from the cell 1.1 to the cell 2.1.

Step 503: The first radio control apparatus sends first indication information to the second radio control apparatus.

The second radio control apparatus may be a radio control apparatus corresponding to the second cell, and can provide the information about the first model for the terminal that is in the second cell. The second cell is different from the first cell, and the second cell may be a cell that provides a service for the terminal. In the method shown in FIG. 5, the second radio control apparatus and the first radio control apparatus are two different radio control apparatuses, for example, deployed at different locations. The second radio control apparatus may be deployed outside the second access network device, or may be deployed in the second access network device. This is not limited. The second access network device is an access network device serving the second cell.

For example, as shown in FIG. 2, it is assumed that the terminal 1 moves or is handed over from the cell 1.1 to the cell 2.1, the first cell is the cell 1.1, the second cell is the cell 2.1, and the second radio control apparatus is the radio control apparatus 2.

The first indication information indicates the second-part information of the first model, and the first indication information may be replaced with context information of the first model. The second-part information of the first model may be information to be sent to the terminal when the terminal is located in the second cell. The second-part information of the first model is referred to as information that is in the information about the first model and that is not sent to the terminal or remaining information in the information about the first model. The first indication information includes any one of the following first implementation to third implementation.

In a first implementation, the first indication information indicates location information, in the information about the first model, of the first-part information that has been sent to the terminal, for example, indicates an end location of the first-part information in the information about the first model (where the first indication information may include information exchanged between the first radio control apparatus and the terminal before the information about the first model is sent). Optionally, the first indication information further includes the identification information of the first model.

When the information about the first model is sent to the terminal in the form of the data packet shown in (2.1), the first indication information may include a sequence number of the last data packet corresponding to the first-part information, an offset value between a start location of the last data packet and a start location of the information about the first model, sequence numbers of all data packets corresponding to the first-part information, an offset value between a start location of each data packet in the first-part information and a start location of the information about the first model, or sequence numbers of all data packets that are sent by the first radio control apparatus to the terminal and that are not correctly received by the terminal and a sequence number of the last data packet corresponding to the first-part information. Specific content included in the first indication information is different in different sending manners of data packets.

For example, if a next data packet is sent to the terminal only after a data packet is successfully sent, the first indication information may include the sequence number of the last data packet corresponding to the first-part information, or the offset value between the start location of the last data packet and the start location of the information about the first model. If a next data packet may be sent to the terminal before a data packet is successfully sent, the first indication information may include a sequence number of a data packet corresponding to the first-part information (for example, the sequence numbers of all the data packets corresponding to the first-part information, the sequence number of the last data packet corresponding to the first-part information, or the sequence numbers of all the data packets that are sent by the first radio control apparatus to the terminal and that are not correctly received by the terminal and the sequence number of the last data packet corresponding to the first-part information) or the offset value between the start location of each data packet and the start location of the information about the first model.

When the information about the first model is sent to the terminal in the message manner shown in (2.2), the first indication information may include a sequence number of the last message corresponding to the first-part information, sequence numbers of all messages corresponding to the first-part information, an offset value between a start location of the last message and a start location of the information about the first model, an offset value between a start location of each message in the first-part information and a start location of the information about the first model, or sequence numbers of all messages that are sent by the first radio control apparatus to the terminal and that are not correctly received by the terminal and a sequence number of the last message corresponding to the first-part information. Specific content included in the first indication information is different in different sending manners of the message.

For example, if a next message is sent to the terminal only after a message is successfully sent, the first indication information may include the sequence number of the last message corresponding to the first-part information or the offset value between the start location of the last message and the start location of the information about the first model. If a next message can be sent to the terminal before a message is successfully sent, the first indication information may include a sequence number of a message corresponding to the first-part information (for example, the sequence numbers of all the messages corresponding to the first-part information, the sequence number of the last message corresponding to the first-part information, or the sequence numbers of all the messages that are sent by the first radio control apparatus to the terminal and that are not correctly received by the terminal and the sequence number of the last message corresponding to the first-part information) or the offset value between the start location of each message and the start location of the information about the first model.

It should be understood that, if the information exchanged between the first radio control apparatus and the terminal exists before the information about the first model is sent, the offset value may be an offset value from a start location of the information exchanged between the first radio control apparatus and the terminal. If the information exchanged between the first radio control apparatus and the terminal does not exist before the information about the first model is sent, the offset value may be the offset value from the start location of the information about the first model.

In a second implementation, the first indication information indicates a start location of the second-part information to be sent to the terminal in the information about the first model (where the first indication information may include information exchanged between the first radio control apparatus and the terminal before the information about the first model is sent). Optionally, the first indication information may further include the identification information of the first model.

In embodiments of this application, the second-part information is further described as remaining information in the information about the first model other than the first-part information that has been sent to the terminal, remaining information of the first model, or information that is in the information about the first model and that is not sent to the terminal, .

Similarly, when the first-part information is sent in the foregoing (2.1) or (2.2) form, the first indication information that indicates the start location of the second-part information may be indicated in a manner similar to that of sending the information about the first model in the first implementation. Details are shown as follows.

When the information about the first model is sent in the form of the data packet shown in (2.1), the first indication information includes a sequence number of the first data packet of the second-part information, an offset value between a start location of the first data packet of the second-part information and a start location of the information about the first model, sequence numbers of all data packets corresponding to the second-part information, an offset value between a start location of each data packet in the second-part information and a start location of the information about the first model, or sequence numbers of all data packets that are sent by the first radio control apparatus to the terminal and that are not correctly received by the terminal and a sequence number corresponding to the first data packet that is not sent by the first radio control apparatus to the terminal.

Two different sending manners for data are as follows: 1. A next piece of data is sent to the terminal only after one piece of data is successfully sent. 2. Before a piece of data is successfully sent, a next piece of data can be sent to the terminal. Specific content included in the first indication information is different. Specifically, for this implementation, refer to the descriptions in the first implementation. Details are not described again.

When the information about the first model is sent in the form of the message shown in (2.2), the first indication information includes a sequence number of the first message corresponding to the second-part information, sequence numbers of all messages corresponding to the second-part information, an offset value between a start location of the first message corresponding to the second-part information and a start location of the information about the first model, an offset value between a start location of each message in the second-part information and a start location of the information about the first model, or sequence numbers of all messages that are sent by the first radio control apparatus to the terminal and that are not correctly received by the terminal and a sequence number corresponding to the first message that is not sent by the first radio control apparatus to the terminal.

Two different sending manners for the message are as follows: 1. A next message is sent to the terminal only after a message is successfully sent. 2. Before a message is successfully sent, the next message can be sent to the terminal. Specific content included in the first indication information is different. Specifically, for this implementation, refer to the descriptions in the first implementation. Details are not described again.

In a third implementation, the first indication information may include the second-part information.

Optionally, the first indication information may further include the identification information of the first model.

Related descriptions of the second-part information are shown above, and details are not described again.

It should be noted that, when the first indication information indicates the end location of the first-part information in the information about the first model or when the first indication information indicates the start location of the second-part information in the information about the first model, the second radio control apparatus may locally store the information about the first model, or the second radio control apparatus may obtain the information about the first model from another device, and a size and content of the information about the first model that are stored or obtained by the second radio control apparatus are completely the same as those of the information about the first model that are locally stored by the first radio control apparatus. Further, when the second-part information includes the information exchanged between the first radio control apparatus and the terminal before the information about the first model is sent, a size and content of the information that needs to be exchanged with the terminal and that is stored in the first radio control apparatus are completely the same as those of information that needs to be exchanged with the terminal and that is stored in the second radio control apparatus.

For example, when the first radio control apparatus determines that the terminal moves or is handed over from the first cell to the second cell, the first radio control apparatus is triggered to send the first indication information to the second radio control apparatus. Further, the first radio control apparatus stops sending the information about the first model to the terminal that is in the first cell.

In this embodiment of this application, that the first radio control apparatus sends first indication information to the second radio control apparatus may include: The first radio control apparatus directly sends the first indication information to the second radio control apparatus, or the first radio control apparatus sends the first indication information to the first access network device, the first access network device receives the first indication information and sends the first indication information to the second access network device, and the second access network device sends the first indication information to the second radio control apparatus.

For example, when the terminal is in a connected mode and moves or is handed over from the first cell to the second cell, the first access network device sends a handover request to the second access network device, where the handover request carries the first indication information. That is, in a handover procedure, the first access network device sends the first indication information to the second access network device. Alternatively, when the terminal is in an inactive mode and moves or is handed over from the first cell to the second cell, the first access network device receives, from the second access network device, a request message for requesting a UE context, and the first access network device sends, to the second access network device, a response message carrying the UE context. The response message further carries the first indication information. That is, in an RRC connection resume procedure of the terminal, the first access network device sends the first indication information to the second access network device, to reduce signaling overheads.

In this embodiment of this application, that the first radio control apparatus determines that the terminal moves or is handed over from the first cell to the second cell may include: In a scenario in which the first radio control apparatus is independently deployed outside the first access network device, after receiving a handover request response message sent by the second access network device or obtaining a UE context request message, the first access network device determines that the terminal moves or is handed over to the second cell. The first radio control apparatus receives a notification message from the first access network device, where the notification message is used to notify the first radio control apparatus that the terminal moves or is handed over from the first cell to the second cell.

Step 504: The second radio control apparatus receives the first indication information from the first radio control apparatus, and sends, based on the first indication information, the second-part information to the terminal that is in the second cell.

The terminal in the second cell in step 504 is the terminal that moves or is handed over from the first cell to the second cell, and the terminal has received the first-part information of the first model.

For example, the second radio control apparatus may first determine the first model that is sent by the first radio control apparatus to the terminal or the information that is about the first model and that is sent by the first radio control apparatus to the terminal, and then learn, based on the first indication information, of content that is in the information about the first model and that has been sent by the first radio control apparatus to the terminal, and continue to send, to the terminal that is in the second cell, remaining content in the information about the first model other than the information that has been sent by the first radio control apparatus to the terminal.

The second radio control apparatus may determine, in the following several manners, the first model that is sent by the first radio control apparatus to the terminal or the information that is about the first model and that is sent by the first radio control apparatus to the terminal.

Manner 1: The second radio control apparatus and the first radio control apparatus use the same first model or use the same information about the first model, and the same identification information about the first model. In this way, the second radio control apparatus knows, based on the identification information that is of the first model and that is included in the first indication information, the first model that has been received and stored by the terminal (or has been sent to the terminal) or the information about the first model.

Manner 2: The second radio control apparatus and the first radio control apparatus may use different first models or different information about the first models, but the two first radio control apparatus exchange the information about the first models and identification information of the first models in advance. In this way, the second radio control apparatus knows, based on the identification information that is of the first model and that is in the first indication information, information, of a specific first model, configured by the first radio control apparatus for the terminal.

Manner 3: The second radio control apparatus and the first radio control apparatus support only one first model or information about one first model, and the first model or the information about one first model supported by the second radio control apparatus and the first radio control apparatus is the same. In this way, when receiving the first indication information, the second radio control apparatus may know that the first radio control apparatus configures the information about the first model for the terminal.

Manner 4: Each cell corresponding to the second radio control apparatus and the first radio control apparatus supports only one first model or information about one first model, and the first model or the information about one first model supported by each cell corresponding to the second radio control apparatus and the first radio control apparatus is the same. In this way, the second radio control apparatus knows, based on the cell identifier of the first cell, that the first radio control apparatus configures, for the terminal, the information about the first model supported by the first cell.

Further, the remaining content in the information about the first model other than the information that has been sent by the first radio control apparatus to the terminal continues to be sent, based on the first indication information, to the terminal located in the second cell. For example, the second radio control apparatus learns, based on the sequence number of the last data packet/message corresponding to the first-part information that is in the first indication information, which data packets/messages with sequence numbers before the sequence number have been sent to the terminal, and continues to send the remaining second-part information of the first model to the terminal, for example, continues to send data packets corresponding to a next sequence number and subsequent sequence numbers after the sequence number of the last data packet corresponding to the first-part information.

For another example, the second radio control apparatus learns, based on the sequence number of the first data packet corresponding to the second-part information in the first indication information, which data packets are to be sent, and the second radio control apparatus continues to send the first data packet and a data packet corresponding to a subsequent sequence number after the sequence number of the first data packet to the terminal.

For still another example, when the first-part information includes part information in the information exchanged between the first radio control apparatus and the terminal before the information about the first model is sent, the second radio control apparatus learns, based on the first indication information, which information is exchanged between the first radio control apparatus and the terminal and which interaction processes have been performed. In this case, the second radio control apparatus may not perform these interaction processes, and perform remaining interaction processes; and sends the information about the first model, for example, configuration information of the first model, to the terminal after transmission of the information exchanged between the first radio control apparatus and the terminal is completed.

It should be noted that, a manner in which the second access control apparatus sends the second-part information is the same as a manner in which the first access control apparatus sends the information about the first model, and the second-part information may be sent in Manner (1.1) or Manner (1.2) in step 501. A sending form of the second-part information is the same as that of the first-part information, and the second-part information may also be sent in the data packet form shown in (2.1) or the message form shown in (2.2) in step 501.

Further, the second radio control apparatus may further send seventh indication information to the terminal, where the seventh indication information may indicate the terminal to continue to use the stored first model, so that the terminal combines, based on the seventh indication information, the second-part information and the first-part information that is previously stored by the terminal.

In a possible design, the seventh indication information may include the identification information of the first model. In another possible design, when the terminal receives information about only one first model, the seventh indication information includes a Boolean variable: false (false) or true (true). The Boolean variable indicates whether the terminal uses the received information (namely, the first-part information) about the first model. For example, when a value of the Boolean variable is true, the terminal is indicated to use the received information about the first model. When a value of the Boolean variable is false, it indicates that the first model changes or the information about the first model changes, the second-part information delivered by the second radio control apparatus to the terminal is information about a new model (an updated first model) or update information of the first model (for example, information obtained by updating some information in the first model), and the terminal cannot combine the second-part information and the first-part information into complete information of the first model.

Optionally, the second radio control apparatus may not need to send the seventh indication information to the terminal, but directly send the second-part information. When receiving the second-part information, the terminal device continues to use the stored first model by default. For example, the terminal may learn, based on a sequence number (for example, not starting from 0) of a data packet or a message, that the stored first model continues to be used.

Step 505: The terminal receives the second-part information.

Further, after receiving the second-part information from the second radio control apparatus, the terminal combines the second-part information and the first-part information that is previously received from the first radio control apparatus to obtain final complete information about the first model.

For example, the terminal receives the seventh indication information that indicates the terminal to continue to use the stored first model, obtains, based on the seventh indication information, the first-part information previously received from the first radio control apparatus, and combines the first-part information and the second-part information to obtain the complete information of the first model.

For another example, the second radio control apparatus does not send the seventh indication information to the terminal, and after receiving the second-part information, the terminal combines, by default, the second-part information and the first-part information that is previously received from the first radio control apparatus to obtain the final complete information about the first model.

Based on the method shown in FIG. 5, when the first radio control apparatus sends the first-part information of the first model to the terminal that is in the first cell, if the terminal moves or is handed over to the second cell different from the first cell, the first radio control apparatus sends, to the second radio control apparatus, the first indication information that indicates the remaining information (for example, the second-part information) of the first model, so that the second radio control apparatus sends the remaining information of the first model to the terminal that is in the second cell, to implement continuous sending. Therefore, after the terminal moves or is handed over to a new cell, all information about the first model does not need to be resent to the terminal, and air interface overheads caused by the resending are avoided.

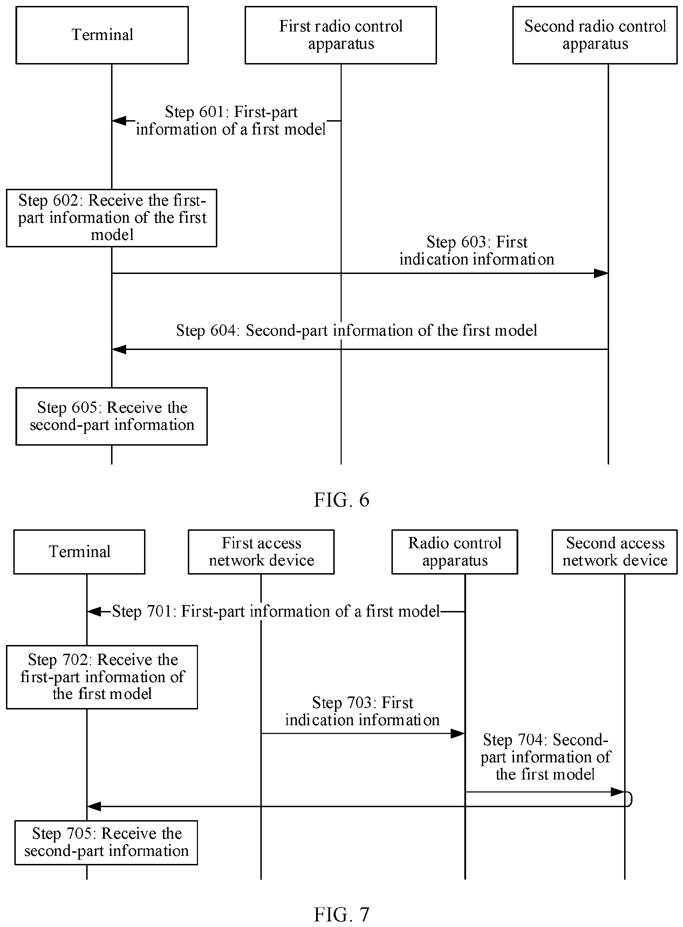

The method shown in FIG. 5 is described by using an example in which the first radio control apparatus sends the first indication information to the second radio control apparatus. Alternatively, the terminal may send the first indication information to the second radio control apparatus, and indicate location information of the second-part information to the second radio control apparatus. Specifically, for the process, refer to FIG. 6.

FIG. 6 is a flowchart of a model configuration method according to an embodiment of this application. In the method shown in FIG. 6, when a terminal that is receiving information about a first model moves or is handed over to a second cell, the terminal indicates remaining second-part information in the information about the first model to a second radio control apparatus, so that the second radio control apparatus sends the remaining second-part information to the terminal based on an indication of a first radio control apparatus. It should be noted that, in the method shown in FIG. 6, if a first radio control apparatus is deployed in a first access network device, the first radio control apparatus in the steps shown in FIG. 6 may be replaced with the first access network device. If the second radio control apparatus is deployed in a second access network device, the second radio control apparatus in FIG. 5 may be replaced with the second access network device. As shown in FIG. 6, the method may include the following steps.

Step 601: The first radio control apparatus sends first-part information of the first model to the terminal that is in a first cell.

For related descriptions of the first radio control apparatus, the first cell, and the terminal, refer to the descriptions in step 501. For an execution process of step 601, refer to the process shown in step 501. For example, the first radio control apparatus may process the information about the first model in a data packet form or a message form, and then send processed information to the terminal in Manner (1.1) or (1.2). Specifically, for this process, refer to the descriptions in step 501. Details are not described again.

Step 602: The terminal receives the first-part information of the first model.

For step 602, refer to the descriptions in step 502. Details are not described again.

Step 603: The terminal sends first indication information to the second radio control apparatus.

The second radio control apparatus may be a radio control apparatus corresponding to the second cell, and can provide the information about the first model for the terminal that is in the second cell. The second cell is different from the first cell, and the second cell may be a cell that provides a service for the terminal. In the method shown in FIG. 5, the second radio control apparatus and the first radio control apparatus are two different radio control apparatuses, for example, deployed at different locations. The second radio control apparatus may be deployed outside the second access network device, or may be deployed in the second access network device. This is not limited. The second access network device is an access network device serving the second cell. The second radio control apparatus is the same as or different from the first radio control apparatus.

In step 603, the first indication information indicates the second-part information of the first model, and the first indication information may be replaced with context information of the first model. The second-part information of the first model may be information to be sent to the terminal when the terminal is located in the second cell. The second-part information of the first model is referred to as information that is in the information about the first model and that is not sent to the terminal or remaining information in the information about the first model. In cases in which the second radio control apparatus is the same as or different from the first radio control apparatus, specific content included in the first indication information is different. Details are shown as follows.

When the second radio control apparatus is different from the first radio control apparatus, the first indication information may indicate the second-part information of the first model, and the first indication information indicates a location of the first-part information of the first model that has been sent to the terminal, for example, indicates an end location of the first-part information in the information about the first model. Optionally, the first indication information may further include identification information of the first model.

For related descriptions of the first indication information that indicates the location information of the first-part information of the first model that has been sent to the terminal, refer to the descriptions in the first implementation in step 503. Details are not described again.

When the second radio control apparatus is the same as the first radio control apparatus, the first indication information may indicate identification information of the terminal. For example, the first indication information may include the identification information of the terminal, so that the radio control apparatus learns which terminal performs cell movement or cell handover.

For related descriptions of the identification information of the terminal, refer to the descriptions in the embodiment corresponding to FIG. 5. Details are not described again.

For example, that the terminal sends the first indication information may include: In a possible design, the terminal sends the first indication information to the second radio control apparatus via the first access network device. In this case, the first indication information further includes identification information of the second access network device, so that the second radio control apparatus learns, based on the identification information of the second access network device, that the second cell corresponds to the second access network device, and sends the second-part information to the terminal via the second access network device. Alternatively, in another possible design, the terminal sends the first indication information to the second radio control apparatus via the second access network device.

The identification information of the second access network device may be used to identify the second access network device, and the identification information of the second access network device may be an IP address, a MAC address, or the like of the second access network device.

Step 604: The second radio control apparatus receives the first indication information from the terminal, and sends, based on the first indication information, the second-part information to the terminal that is in the second cell.

The terminal in the second cell in step 604 is the terminal that moves or is handed over from the first cell to the second cell, and the terminal has received the first-part information of the first model.

For a specific execution process of step 604, refer to the descriptions in step 504. Details are not described again.

Step 605: The terminal receives the second-part information.

For a specific execution process of step 605, refer to the descriptions in step 604. Details are not described again.

Based on the method shown in FIG. 6, when the first radio control apparatus sends the first-part information of the first model to the terminal that is in the first cell, if the terminal moves or is handed over to the second cell different from the first cell, the terminal sends, to the second radio control apparatus, the first indication information that indicates the remaining information (for example, the second-part information) of the first model, so that after receiving the first indication information sent by the terminal, the second radio control apparatus sends the remaining information of the first model to the terminal that is in the second cell, to implement continuous sending. Therefore, after the terminal moves or is handed over to a new cell, all information about the first model does not need to be resent to the terminal, and air interface overheads caused by the resending are avoided.

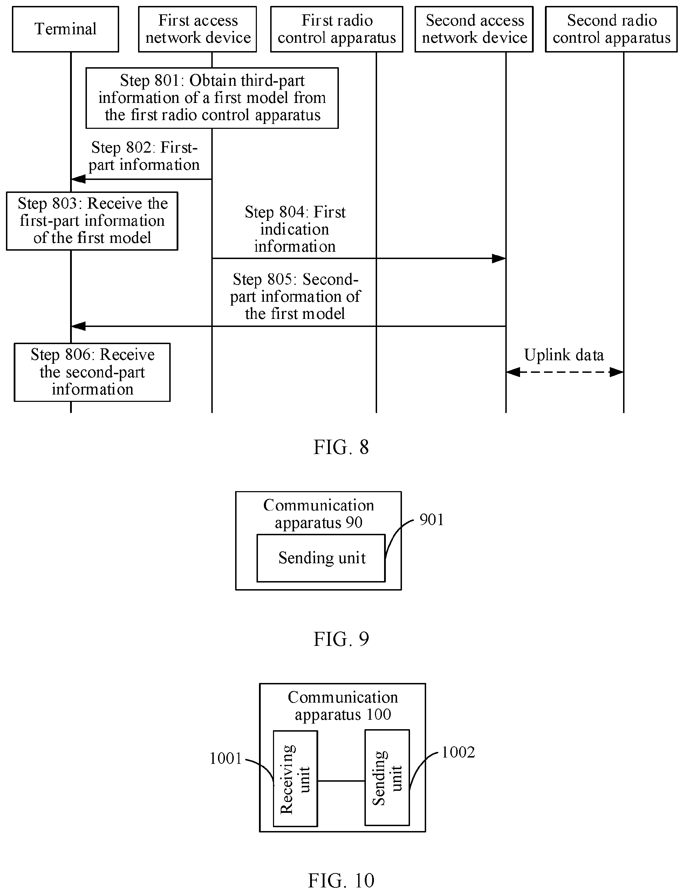

The method shown in FIG. 5 or FIG. 6 is described by using an example in which the first radio control apparatus or the terminal sends the first indication information to the second radio control apparatus. Alternatively, the first access network device may generate the first indication information, and send the first indication information to the second access network device. Specifically, for the process, refer to FIG. 7 or FIG. 8.

FIG. 7 is a flowchart of a model configuration method according to an embodiment of this application. In the method shown in FIG. 7, a first radio control apparatus is the same as a second radio control apparatus, in other words, a first cell and a second cell correspond to a same radio control apparatus. A first access network device indicates remaining second-part information in information about a first model to the radio control apparatus, so that the radio control apparatus sends the remaining second-part information to a terminal based on an indication of the first access network device. It should be noted that, in the method shown in FIG. 7, the radio control apparatus may be independently deployed outside an access network device, or may be deployed in the first access network device or deployed in a second access network device. As shown in FIG. 7, the method may include the following steps.

Step 701: The radio control apparatus sends, via the first access network device, first-part information of the first model to the terminal that is in the first cell.

The radio control apparatus may be a radio control apparatus corresponding to the first cell and the second cell, and can provide the information about the first model for the terminal that is in the first cell or the second cell.

For related descriptions of the first-part information of the first model, the first access network device, the first cell, and the terminal in step 701, refer to the descriptions of the first-part information of the first model, the first access network device, the first cell, and the terminal in step 501. Details are not described again.

For example, that the radio control apparatus sends, via the first access network device, first-part information of the first model to the terminal that is in the first cell may include: The radio control apparatus sends the first-part information of the first model to the first access network device, and the first access network device sends the first-part information of the first model to the terminal that is in the first cell; or the radio control apparatus sends third-part information of the first model to the first access network device, and the first access network device receives the third-part information, and sends the first-part information of the first model in the third-part information to the terminal that is in the first cell. For a process in which the first access network device sends the first-part information of the first model to the terminal that is in the first cell, refer to step 501. Details are not described again.

The third-part information is complete information of the first model or part information of the first model. This is not limited.

Step 702: The terminal receives the first-part information of the first model.

For step 702, refer to the descriptions in step 502. Details are not described again.

Step 703: The first access network device sends first indication information to the radio control apparatus.

The first indication information indicates the second-part information of the first model, and the first indication information may be replaced with context information of the first model. The second-part information of the first model may be information to be sent to the terminal when the terminal is located in the second cell. The second-part information of the first model is referred to as information that is in the information about the first model and that is not sent to the terminal or remaining information in the information about the first model. In step 703, the first indication information has the following several possible designs.

In a possible design, the first indication information indicates identification information of the terminal. Therefore, the radio control apparatus learns, based on the first indication information, which terminal moves or performs cell handover, in other words, moves or is handed over to a new cell. In this case, the third-part information is sent to the terminal by default, and remaining information in the information about the first model other than the third-part information is sent to the terminal located in the new cell.

In another possible design, the first indication information indicates identification information of the terminal and a location of fourth-part information in the third-part information (for example, sequence numbers of all data packets or messages that are sent to the terminal but are not correctly received by the terminal, and a sequence number corresponding to the first data packet or message that is not sent to the terminal, or a start location of the fourth-part information in the third-part information), and the fourth-part information is information that is not sent to the terminal and that is in the third-part information.

In still another possible design, the first indication information indicates identification information of the terminal and a location of the first-part information in the third-part information (for example, sequence numbers of all data packets or messages of the first-part information, or an end location of the first-part information in the third-part information). In this way, the part information that is sent to the first access network device but is not sent by the first access network device to the terminal is indicated to the radio control apparatus, so that the radio control apparatus continues to send, to the terminal that is in the second cell, the fourth-part information that is not sent by the first access network device to the terminal.

In step 703, that the first access network device sends first indication information to the radio control apparatus may include the following Example 1 or Example 2.

Example 1: The first access network device directly sends the first indication information to the radio control apparatus. In Example 1, the first indication information further includes identification information of the second access network device, so that the radio control apparatus learns, based on the identification information of the second access network device, that the second access network device sends the second-part information to the terminal that is in the second cell.

Example 2: The first access network device sends the first indication information to the radio control apparatus via the second access network device. For example, the first access network device sends the first indication information to the second access network device, and the second access network device sends the first indication information to the radio control apparatus. That the first access network device sends the first indication information to the second access network device includes: The first access network device carries the first indication information in a handover request or a response message corresponding to a UE context request, and sends the handover request or the response message to the second access network device. Specifically, for a process in which the first access network device sends the first indication information to the second access network device, refer to the descriptions in FIG. 5. Details are not described again.

It should be noted that the identification information of the terminal in this embodiment may be allocated by the radio control apparatus, or may be allocated by an access network device. When the identification information of the terminal is allocated by the radio control apparatus, the first access network device may directly send the first indication information to the radio control apparatus, or the first access network device may send the first indication information to the radio control apparatus via the second access network device. When the identification information of the terminal is allocated by the second access network device, the first access network device may receive the identification information of the terminal in a handover request response received from the second access network device, and the first access network device sends the first indication information to the radio control apparatus. When the identification information of the terminal is allocated by the first access network device, the first access network device sends the first indication information to the second access network device, and the second access network device sends the first indication information to the radio control apparatus.

Step 704: The radio control apparatus receives the first indication information from the first access network device, and sends, based on the first indication information, the second-part information to the terminal that is in the second cell.

Specifically, for an execution process of step 704, refer to the descriptions in step 504. Details are not described again.

Step 705: The terminal receives the second-part information.

Specifically, for an execution process of step 705, refer to the descriptions in step 505. Details are not described again.

Based on the method shown in FIG. 7, when the radio control apparatus sends, via the first access network device, the first-part information of the first model to the terminal that is in the first cell, if the terminal moves or is handed over to the second cell different from the first cell, the first access network device sends, to the radio control apparatus, the first indication information that indicates the remaining information (for example, the second-part information) of the first model, so that after receiving the first indication information sent by the terminal, the radio control apparatus sends the remaining information of the first model to the terminal that is in the second cell, to implement continuous sending. Therefore, after the terminal moves or is handed over to a new cell, all information about the first model does not need to be resent to the terminal, and air interface overheads caused by the resending are avoided.

FIG. 8 is a flowchart of a model configuration method according to an embodiment of this application. In the method shown in FIG. 8, a first access network device indicates remaining second-part information in information about a first model to a radio control apparatus, so that the radio control apparatus sends the remaining second-part information to a terminal based on an indication of the first access network device. In the method shown in FIG. 8, a first radio control apparatus is the same as or different from a second radio control apparatus. The first radio control apparatus may be independently deployed outside the first access network device, or may be deployed in the first access network device. The second radio control apparatus may be independently deployed outside a second access network device, or may be deployed in the second access network device. As shown in FIG. 8, the method may include the following steps.

Step 801: The first access network device obtains third-part information of the first model from the first radio control apparatus.

The third-part information may be complete information or part information of the first model. This is not limited. For example, the third-part information may be the third-part information described in step 701.

Further, the first access network device may further obtain a quality of service (quality of service, QoS) parameter of the information about the first model, so that the first access network device establishes, based on a QoS parameter of the first model or the QoS parameter of the information about the first model, a radio bearer (radio bearer, RB) used to transmit the information about the first model between the first access network device and the terminal.

The RB in this embodiment of this application may include a DRB or an SRB.

The QoS parameter of the information about the first model in this embodiment of this application may include a priority, a transmission rate requirement, a delay requirement, or the like. The QoS parameter of the information about the first model may be replaced with the QoS parameter of the first model or a QoS parameter of the third-part information of the first model for description. Optionally, different information of the first model may have different QoS parameters. For example, some information in the information about the first model corresponds to QoS parameter #1, and some other information in the information about the first model corresponds to QoS parameter #2. The first access network device may establish a plurality of RBs for a plurality of pieces of different information about the first model, and the plurality of RBs may correspond to different QoS parameters.

Optionally, information about different first models may correspond to different QoS parameters. The first radio control apparatus may deliver information about a plurality of different first models to the terminal, for example, information about a model 1 and information about a model 2. The information about the different first models may correspond to different QoS parameters. The first access network device may establish a plurality of RBs for the terminal to transmit the information about the first models.

The first access network device may obtain the QoS parameter of the information about the first model by using the following Example 1 or Example 2.

Example 1: There is a correspondence between the QoS parameter of the information about the first model and a transmission tunnel that is between the first radio control apparatus and the first access network device and that is used to transmit the information about the first model. If the first access network device receives the third-part information of the first model from the first radio control apparatus through a first transmission tunnel, the first access network device may determine, based on the correspondence between the QoS parameter of the information about the first model and the transmission tunnel, the QoS parameter corresponding to the third-part information that is of the first model and that is transmitted through the first transmission tunnel.

Example 2: Before or when obtaining the third-part information of the first model from the first radio control apparatus, the first access network device receives a QoS parameter indication corresponding to the third-part information, where the QoS parameter indication indicates the QoS parameter corresponding to the third-part information or the QoS parameter of the information about the first model.

Step 802: The first access network device sends first-part information to the terminal that is in a first cell.

The first-part information is included in the third-part information, and the first-part information is information that is in the third-part information and that has been sent to the terminal.

For example, the first access network device may determine RB configuration information of the third-part information based on the QoS parameter of the information about the first model, where the RB configuration information of the third-part information is used to establish an RB for transmitting the third-part information, and send, via the RB, the first-part information to the terminal that is in the first cell.

For example, it is assumed that the first radio control apparatus is independent of the first access network device, the first access network device is in a CU-DU separation architecture, and the third-part information of the first model is transmitted via the RB. In this case, the first access network device may obtain the third-part information and the RB configuration information of the third-part information in the following process. Optionally, the RB configuration information of the third-part information is RB configuration information of the first model or the information about the first model.

A CU-CP of the first access network device obtains the QoS parameter of the first model or the information about the first model from the first radio control apparatus, determines the RB configuration information of the third-part information based on the QoS parameter of the first model or the information about the first model, and sends the RB configuration information of the third-part information to a CU-UP. The CU-UP allocates tunnel information based on the RB configuration information of the third-part information, where the tunnel information may be used to identify the first transmission tunnel, and the first transmission tunnel corresponds to the RB configuration information. The CU-UP sends the tunnel information to the CU-CP, and the CU-CP sends the tunnel information to the first radio control apparatus. The first radio control apparatus sends the third-part information to the CU-UP through the first transmission tunnel based on the tunnel information, and the CU-UP receives the third-part information through the first transmission tunnel, and sends the third-part information to the terminal through the RB indicated by the RB configuration information corresponding to the first transmission tunnel.

Alternatively, a CU-CP of the first access network device obtains the QoS parameter of the first model or the information about the first model from the first radio control apparatus, and determines the RB configuration information of the third-part information based on the QoS parameter of the first model. The CU-CP allocates the tunnel information based on the RB configuration information of the third-part information, where the tunnel information may be used to identify the first transmission tunnel, and the first transmission tunnel corresponds to the RB configuration information. The CU-CP sends the tunnel information to the first radio control apparatus. The first radio control apparatus sends the third-part information to the CU-CP through the first transmission tunnel based on the tunnel information, and the CU-CP receives the third-part information through the first transmission tunnel, and sends the third-part information to the terminal through the RB indicated by the RB configuration information corresponding to the first transmission tunnel.

For another example, it is assumed that the first radio control apparatus is integrated into the first access network device. For example, the first access network device is in a CU-DU separation architecture, and the first radio control apparatus is integrated into a CU-CP. In this case, the first access network device may obtain the third-part information and the RB configuration information of the first model in the following process.

The CU-CP of the first access network device determines the RB configuration information of the third-part information based on the QoS parameter of the first model or the information about the first model, and sends the RB configuration information of the third-part information to a CU-UP. The CU-UP allocates tunnel information and the RB based on the RB configuration information of the third-part information, where the tunnel information may be used to identify the first transmission tunnel. The CU-UP sends the tunnel information to the CU-CP. The CU-CP sends the third-part information to the CU-UP based on the tunnel information through the first transmission tunnel. The CU-UP receives the third-part information, and sends the third-part information to the terminal via the RB indicated by the RB configuration information corresponding to the first transmission tunnel.

For still another example, it is assumed that the first radio control apparatus is integrated into the first access network device. For example, the first access network device is in a CU-DU separation architecture, and the first radio control apparatus is integrated into a CU-UP. In this case, the first access network device may obtain the third-part information and the RB configuration information of the third-part information in the following process.

The CU-UP of the first access network device sends the QoS parameter of the first model or the information about the first model to a CU-CP. The CU-CP determines the RB configuration information of the third-part information based on the QoS parameter of the first model or the information about the first model, and returns the RB configuration information to the CU-UP. The CU-UP sends the third-part information based on the RB configuration information via the RB.

Step 803: The terminal receives the first-part information of the first model.

For step 803, refer to the descriptions in step 502. Details are not described again.

Step 804: The first access network device sends first indication information to the second access network device.

The first indication information indicates the second-part information of the first model, and the first indication information may be replaced with context information of the first model. The second-part information of the first model may be information to be sent to the terminal when the terminal is located in a second cell. The second-part information of the first model is referred to as information that is in the information about the first model and that is not sent to the terminal or remaining information in the information about the first model. In the embodiment shown in FIG. 8, when the third-part information includes all the information about the first model, the second-part information may be remaining information in the third-part information or information that is not sent to the terminal and that is in the third-part information. When the third-part information includes the part information of the first model, the second-part information may include information that is not sent to the terminal and that is in the third-part information, and information that is not sent to the first access network device and that is in the information about the first model.

Specifically, the first indication information includes the following several possible designs.

In a possible design, the first indication information may include the second-part information.

In another possible design, the first indication information indicates a start location of the second-part information in the information about the first model. For example, the first indication information may include a start data packet corresponding to the second-part information or a PDCP sequence number of the first data packet.

In a possible design, the first indication information may indicate an end location of the first-part information in the information about the first model. For example, the first indication information includes a PDCP sequence number of the last data packet corresponding to the first-part information.

In a possible design, the first indication information includes fourth-part information and indicates an end location of the third-part information in the information about the first model, or the first indication information includes fourth-part information and indicates a start location of information that is not sent to the first access network device and that is in the information about the first model.

The fourth-part information may be information that is in the third-part information and that is not sent or that is not successfully sent to the terminal.

For example, that the first access network device sends first indication information to the second access network device may include: The first access network device receives, from the second access network device, tunnel information corresponding to a first RB, where the tunnel information corresponding to the first RB is used to identify a transmission tunnel between the first access network device and the second access network device. The first access network device sends, to the second access network device, the first indication information corresponding to the information that is about the first model and that is transmitted via the first RB.

When sending a handover request to the second access network device, the first access network device notifies the second access network device of related information of the terminal, for example, information about transmitting the information about the first model on the first RB, or information about moving or handing over the terminal to the second cell. Subsequently, the second access network device allocates one piece of tunnel information to the first RB, where the tunnel information is used to identify the transmission tunnel between the first access network device and the second access network device. The second access network device may notify the first access network device of the allocated tunnel information, so that the first access network device sends the first indication information to the second access network device through the transmission tunnel identified by the tunnel information.

Further, the first access network device may further send, to the second radio access network device, PDCP sequence number information corresponding to the second-part information, for example, a PDCP sequence number and a hyper frame number (hyper frame number) of the first data packet corresponding to the second-part information, and/or a bitmap (bitmap) of a data packet corresponding to the fourth-part information in the third-part information, where the bitmap includes one or more bits, a plurality of bits correspond to a plurality of data packets corresponding to the fourth-part information, and a value of each bit indicates whether a data packet corresponding to the bit is sent to the terminal.

Further, the first indication information may further include content in the first indication information in FIG. 5 or FIG. 7.

In addition, the first access network device may further send, to the second access network device, uplink data (for example, some information or process interaction information between the terminal and the first radio control apparatus before the first radio control apparatus sends the information about the first model, or some results of processing data based on the first model by the terminal) of information that is related to the first model and that is sent by the terminal to the first radio control apparatus, where the uplink data is not sent to the first radio control apparatus. PDCP status information corresponding to uplink data of information that is related to the first model and that is received by the first access network device from the terminal may be further sent to the second radio access network device, for example, the first PDCP sequence number that has not been received, and a receiving status (namely, whether an uplink data packet corresponding to a PDCP sequence number is received) of uplink data corresponding to a plurality of PDCP sequence numbers after the PDCP sequence number.

Step 805: The second access network device receives the first indication information, and sends, based on the first indication information, the second-part information to the terminal that is in the second cell.

For example, the second access network device sends the first indication information to the second radio control apparatus, so that the second radio control apparatus learns, based on the first indication information, which content has been sent by the radio control apparatus to a terminal that moves or is handed over between cells, and continues to send, via the second access network device to the terminal that is in the second cell, remaining content in the information about the first model other than the information that has been sent to the terminal.

Specifically, for an execution process of step 805, refer to the descriptions in step 504. Details are not described again.

Further, the second access network device may send received uplink data (including the uplink data received from the first access network device and the uplink data received from the terminal) to the second radio control apparatus. Optionally, only after receiving uplink data corresponding to a PDCP sequence number before a PDCP sequence number corresponding to the uplink data received from the first access network device, the second access network device sends, to the second radio control apparatus, the uplink data packet received from the first access network device.

Step 806: The terminal receives the second-part information.

For step 806, refer to the descriptions in step 505. Details are not described again.

Based on the method shown in FIG. 8, when the first radio control apparatus sends, via the first access network device, the first-part information of the first model to the terminal that is in the first cell, if the terminal moves or is handed over to the second cell different from the first cell, the first access network device sends, to the second access network device, the first indication information that indicates the remaining information (for example, the second-part information) of the first model, so that after receiving the first indication information sent by the terminal, the radio control apparatus sends the remaining information of the first model to the terminal that is in the second cell, to implement continuous sending. Therefore, after the terminal moves or is handed over to a new cell, all the information about the first model does not need to be resent to the terminal, and air interface overheads caused by the resending are avoided.

Further, in the methods shown in FIG. 7 and FIG. 8, the method may further include:
the first access network device sends a first indication message to the first radio control apparatus, where the first indication message indicates the terminal to move or be handed over from the first cell to the second cell.

The first access network device receives a first end indication from the first radio control apparatus, where the first end indication indicates the first radio control apparatus to no longer send information exchanged between the first radio control apparatus and the terminal to the first access network device or indicate the first radio control apparatus to no longer send the information about the first model to the first access network device.

Further, in the methods shown in FIG. 7 and FIG. 8, the method may further include:
the first access network device sends a second end indication to the second access network device, where the second end indication indicates to no longer send the information exchanged between the first radio control apparatus and the terminal to the second access network device, or indicates to no longer send the information about the first model to the second access network device.

For example, when the first radio control apparatus corresponding to the first access network device and the second radio control apparatus corresponding to the second access network device are different radio control apparatuses, after the first radio control apparatus receives the first indication message, the first radio control apparatus stops sending, to the first access network device, the information that needs to be exchanged with the terminal, or stops sending the information about the first model to the first access network device. Optionally, the first radio control apparatus sends the first end indication to the first access network device. The first end indication may indicate the first radio control apparatus not to subsequently send, to the first access network device, the information that needs to be exchanged between the first radio control apparatus and the terminal, or indicate the first radio control apparatus to no longer send the information about the first model to the first access network device. After the first access network device sends, to the second access network device, all information that is received from the first radio control apparatus and that needs to be exchanged between the first radio control apparatus and the terminal, the first access network device sends the second end indication to the second access network device, to indicate the first access network device to no longer send, to the second access network device, the information that needs to be exchanged between the first radio control apparatus and the terminal, or indicate the first access network device to no longer send the information about the first model to the second access network device.

Alternatively, after sending all the information about the first model to the first access network device, the first radio control apparatus may stop sending, to the first access network device, remaining information that needs to be exchanged between the first radio control apparatus and the terminal, or stop sending the information about the first model to the first access network device. Optionally, the first radio control apparatus sends the first end indication to the first access network device. The first end indication may indicate the first radio control apparatus not to subsequently send, to the first access network device, the information that needs to be exchanged between the first radio control apparatus and the terminal, or indicate the first radio control apparatus not to subsequently send the information about the first model to the first access network device. After the first access network device sends, to the second access network device, all information that is received from the first radio control apparatus and that needs to be exchanged between the first radio control apparatus and the terminal, the first access network device sends the second end indication to the second access network device, to indicate the first access network device to no longer send, to the second access network device, the information that needs to be exchanged between the first radio control apparatus and the terminal, or indicate the first access network device to no longer send the information about the first model to the second access network device.

For another example, when the first radio control apparatus corresponding to the first access network device and the second radio control apparatus corresponding to the second access network device are same radio control apparatuses, after the first radio control apparatus receives the first indication message, the first radio control apparatus stops sending, to the first access network device, the information that needs to be exchanged with the terminal, or stops sending the information about the first model to the first access network device. Optionally, the first radio control apparatus sends the first end indication to the first access network device, where the first end indication may indicate the first radio control apparatus not to subsequently send the information that needs to be exchanged between the first radio control apparatus and the terminal to the first access network device, or indicate the first radio control apparatus not to subsequently send the information about the first model to the first access network device.

The second access network device preferentially sends, to the terminal, information that is transferred from the first access network device, where the information is the information that needs to be exchanged between the first radio control apparatus and the terminal or the information about the first model. Then, the second access network device sends, to the terminal, information that is received by the second access network device from the second radio control apparatus, where the information is the information that needs to be exchanged between the second radio control apparatus and the terminal or the information about the first model. The second access network device sends, to the second radio control apparatus, the uplink data packets received from the terminal and data packets that are already received in sequence and that are in uplink data packets transferred from the first access network device.

The foregoing mainly describes the solutions provided in embodiments of this application from a perspective of interaction between nodes. It may be understood that, to implement the foregoing functions, each node such as the access network device, the terminal, and the radio control apparatus includes a corresponding hardware structure and/or software module for performing each function. A person skilled in the art should be easily aware that algorithm steps in examples described with reference to embodiments disclosed in this specification can be implemented in a form of hardware, software, or a combination of hardware and computer software in the methods in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, division into functional modules may be performed on an access network device, a terminal, and a radio control apparatus based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 9 shows a structural diagram of a communication apparatus 90. The communication apparatus 90 may be a first radio control apparatus, a chip in the first radio control apparatus, a system-on-a-chip, or another apparatus that can implement a function of the first radio control apparatus in the foregoing methods. Alternatively, the communication apparatus 90 may be a first access network device, a chip in the first access network device, a system-on-a-chip, or another apparatus that can implement a function of the first access network device in the foregoing methods. The communication apparatus 90 may be configured to perform the function of the first radio control apparatus in the foregoing method embodiments. In a feasible implementation, the communication apparatus 90 shown in FIG. 9 includes a sending unit 901.

The sending unit 901 is configured to: send, to a terminal that is in a first cell, first-part information of a first model used by the terminal to process data, and send first indication information that indicates second-part information of the first model, where the second-part information is information to be sent to the terminal when the terminal is located in a second cell, and the first cell and the second cell are different cells. For example, the sending unit 901 is configured to support the communication apparatus 90 in performing step 501, step 503, step 601, step 703, step 802, and/or step 804.

The communication apparatus 90 may further include a processing unit, configured to process information received from the apparatus, and/or configured to generate information to be sent to another apparatus.

Specifically, for all related content of the steps in the foregoing method embodiments shown in FIG. 5 to FIG. 8, refer to function descriptions of the corresponding functional modules. Details are not described herein again. The communication apparatus 90 is configured to perform a function of the first radio control apparatus (or radio control apparatus) or the first access network device in the model configuration method shown in the methods shown in FIG. 5 to FIG. 8. Therefore, an effect the same as that of the foregoing model configuration methods can be achieved.

In another feasible implementation, the communication apparatus 90 shown in FIG. 9 includes a processing module and a communication module. The processing module is configured to control and manage an action of the communication apparatus 90. For example, the communication module may integrate a function of the sending unit 901, and may be configured to support the communication apparatus 90 in performing steps such as step 501, step 503, step 601, step 703, step 802, and step 804, and communicating with another network entity, for example, communicating with the functional module or the network entity shown in FIG. 2. The communication apparatus 90 may further include a storage module, configured to store instructions and/or data. When the instructions are executed by the processing module, the processing module is enabled to implement the foregoing methods on a terminal side.

The processing module may be a processor, a controller, a module, or a circuit. The processing module may implement or execute various example logical blocks described with reference to content disclosed in embodiments of this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 90 in this embodiment of this application may be the communication apparatus shown in FIG. 4.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly completed and performed by a hardware processor, or may be completed and performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store instructions and/or data.

FIG. 10 shows a structural diagram of a communication apparatus 100. The communication apparatus 100 may be a terminal, a chip in a terminal, a system-on-a-chip, or another apparatus that can implement a function of the terminal in the foregoing methods. The communication apparatus 100 may be configured to perform the function of the terminal in the foregoing method embodiments. In a feasible implementation, the communication apparatus 100 shown in FIG. 10 includes a receiving unit 1001 and a sending unit 1002.

The receiving unit 1001 is configured to receive, in a first cell, first-part information of a first model. For example, the receiving unit 1001 is configured to support the communication apparatus 100 in performing step 502, step 602, step 702, and/or step 803.

The sending unit 1002 is configured to send first indication information that indicates second-part information of the first model, where the second-part information is information to be sent to a terminal when the terminal is located in a second cell, and the first cell and the second cell are different cells. For example, the sending unit 1002 is configured to support the communication apparatus 100 in performing step 603.

Further, the receiving unit 1001 may be further configured to receive, in the second cell, the second-part information of the first model. For example, the receiving unit 1001 is configured to support the communication apparatus 100 in performing step 505, step 605, step 705, and/or step 806.

The communication apparatus 100 may further include a processing unit, configured to process information received from the apparatus, and/or configured to generate information to be sent to another apparatus.

For all content related to the steps in the foregoing method embodiments, refer to function descriptions of corresponding functional modules. Details are not described herein. The communication apparatus 100 is used for a function of the terminal in the model configuration method, and an effect the same as that of the foregoing model configuration methods can be achieved.

In another feasible implementation, the communication apparatus 100 shown in FIG. 10 includes a processing module and a communication module. The processing module is configured to control and manage an action of the communication apparatus 100. The communication module may integrate functions of the receiving unit 1001 and the sending unit 1002, and may be configured to support the communication apparatus 100 in performing a communication function. The communication apparatus 100 may further include a storage module, configured to store instructions and/or data of the communication apparatus 100. When the instructions are executed by the processing module, the processing module may be enabled to implement the foregoing methods on a network device side.

The processing module may be a processor, a controller, a module, or a circuit. The processing module may implement or execute various example logical blocks described with reference to content disclosed in embodiments of this application. Alternatively, the processor may be a combination of processors implementing a computing function, for example, a combination of one or more microprocessors, or a combination of a DSP and a microprocessor. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 100 in this embodiment of this application may be the communication apparatus shown in FIG. 4.

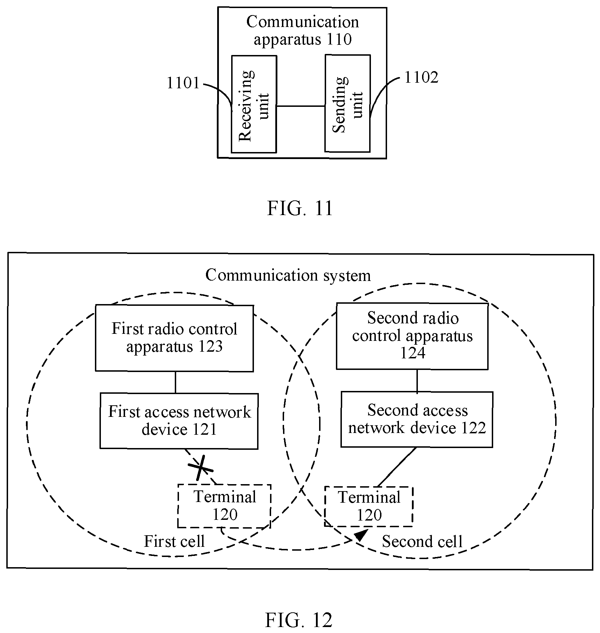

FIG. 11 is a structural diagram of a communication apparatus 110. The communication apparatus 110 may be a second access network device, a chip in the second access network device, a system-on-a-chip, or another apparatus that can implement a function of the second access network device in the foregoing methods. The communication apparatus 110 may be configured to perform the function of the second access network device in the foregoing method embodiments. Alternatively, the communication apparatus 110 may be a second radio control apparatus, a chip in the second radio control apparatus, a system-on-a-chip, or another apparatus that can implement a function of the second radio control apparatus in the foregoing methods. The communication apparatus 110 may be configured to perform the function of the second network device in the foregoing method embodiments. In a feasible implementation, the communication apparatus 110 shown in FIG. 11 includes a receiving unit 1101 and a sending unit 1102.

The receiving unit 1101 is configured to receive first indication information that indicates second-part information of a first model. For example, the receiving unit 1101 may support the communication apparatus 110 in performing step 504, step 604, step 704, and/or step 805.

The sending unit 1102 is configured to send the second-part information to a terminal based on the first indication information. For example, the sending unit 1102 may support the communication apparatus 110 in performing step 504, step 604, step 704, and/or step 805.

The communication apparatus 110 may further include a processing unit, configured to process information received from the apparatus, and/or configured to generate information to be sent to another apparatus.

Specifically, for all related content of the steps in the foregoing method embodiments shown in FIG. 4 to FIG. 8, refer to function descriptions of the corresponding functional modules. Details are not described herein again. The communication apparatus 110 is configured to perform a function of the second access network device or the second radio control apparatus in the model configuration methods shown in FIG. 4 to FIG. 8. Therefore, an effect the same as that of the foregoing model configuration methods can be achieved.

In another feasible implementation, the communication apparatus 110 shown in FIG. 11 includes a processing module and a communication module. The processing module is configured to control and manage an action of the communication apparatus 110. For example, the processing module may integrate a function of the processing unit, and may be configured to support the communication apparatus 110 in performing an action of the network device described in this specification other than a receiving or sending action. The communication module may integrate a function of the sending unit 1101, and may be configured to support the communication apparatus 110 in performing steps such as step 401, step 604, step 706, and step 803, and communicating with another network entity, for example, communicating with the functional module or the network entity shown in FIG. 2. The communication apparatus 110 may further include a storage module, configured to store instructions and/or data of the communication apparatus 110. When the instructions are executed by the processing module, the processing module may be enabled to implement the foregoing methods on a network device side.

The processing module may be a processor, a controller, a module, or a circuit. The processing module may implement or execute various example logical blocks described with reference to content disclosed in embodiments of this application. Alternatively, the processor may be a combination of processors implementing a computing function, for example, a combination of one or more microprocessors, or a combination of a DSP and a microprocessor. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 110 in this embodiment of this application may be the communication apparatus shown in FIG. 4.

FIG. 12 is a structural diagram of a communication system according to an embodiment of this application. As shown in FIG. 12, the communication system may include a terminal 120, a first access network device 121, a second access network device 122, a first radio control apparatus 123, and a second radio control apparatus 124. It should be noted that FIG. 12 is merely an example of an accompanying drawing. Network elements included in the communication system shown in FIG. 12 and a quantity of the network elements are not limited in this embodiment of this application.

The terminal 120 has functions of the terminal in the one or more methods shown in FIG. 5 to FIG. 8. The first access network device 121 has a function of the first access network device in the one or more methods shown in FIG. 5 to FIG. 8. The second access network device 122 has a function of the second access network device in the one or more methods shown in FIG. 5 to FIG. 8. The first radio control apparatus 123 has a function of the first radio control apparatus in the one or more methods shown in FIG. 5 to FIG. 8. The second radio control apparatus 124 has a function of the second radio control apparatus in the one or more methods shown in FIG. 5 to FIG. 8.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, terms such as "example" or "for example" are used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, in embodiments of this application, "connection" means various connection manners such as a direct connection or an indirect connection, for implementing communication between devices. This is not limited in embodiments of this application.

In embodiments of this application, unless otherwise specified, "transmission" (transmit/transmission) refers to bidirectional transmission, and includes a sending action and/or a receiving action. Specifically, "transmission" in embodiments of this application includes data sending, data receiving, or data sending and data receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or the functions according to embodiments of the present invention are generated. The computer may be a general-purpose computer, a dedicated computer, a computer network, a radio control apparatus, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The foregoing descriptions are merely specific implementations of embodiments of this application the protection scope of this application is however defined solely by the appended claims.

## Claims

1. A model configuration method performed by a first communications apparatus, wherein the method comprises:
sending (501, 601, 701, 802) first-part information of a first model to a terminal that is in a first cell, wherein the first model is an artificial intelligence, AI, model and is used by the terminal to process data; and
sending (503, 703, 804) first indication information, wherein the first indication information indicates second-part information of the first model, the second-part information is information to be sent to the terminal when the terminal is located in a second cell, and the first cell and the second cell are different cells, wherein the second-part information is remaining information other than the first-part information in information about the first model.

2. The method according to claim 1, wherein the sending (503, 703, 804) first indication information comprises:
sending the first indication information to a second radio control apparatus.

3. The method according to claim 1 or 2, wherein
the first indication information indicates an end location of the first-part information in the information about the first model;
the first indication information indicates a start location of the second-part information in the information about the first model; or
the first indication information comprises the second-part information.

4. The method according to claim 1, wherein a radio control apparatus corresponding to the first cell is the same as that corresponding to the second cell; and
the first indication information indicates identification information of the terminal;
the first indication information indicates identification information of the terminal and a start location of fourth-part information in third-part information, wherein the third-part information is information obtained from the radio control apparatus, and the fourth-part information is information that is not sent to the terminal and that is in the third-part information; or
the first indication information indicates identification information of the terminal and an end location of the first-part information in third-part information, wherein the third-part information is information obtained from the radio control apparatus.

5. The method according to claim 4, wherein the sending (503, 703, 804) first indication information comprises:
sending the first indication information to a second access network device; or
sending the first indication information to the radio control apparatus, wherein the first indication information further indicates identification information of a second access network device, wherein
the second access network device serves the second cell.

6. The method according to claim 1, wherein the first cell corresponds to a first radio control apparatus, the second cell corresponds to a second radio control apparatus, and the first radio control apparatus is different from the second radio control apparatus; and the sending first indication information comprises:
sending the first indication information to a second access network device.

7. The method according to claim 6, wherein
the first indication information comprises the second-part information;
the first indication information indicates a start location of the second-part information in the information about the first model;
the first indication information indicates an end location of the first-part information in the information about the first model; or
the first indication information comprises fourth-part information and an end location of third-part information in the information about the first model, the fourth-part information is information that is not sent to the terminal and that is in the third-part information, and the third-part information is part information that is of the first model and that is obtained from the first radio control apparatus.

8. The method according to claim 6 or 7, wherein the method further comprises:
sending packet data convergence protocol, PDCP, sequence number information corresponding to the second-part information to the second access network device.

9. The method according to any one of claims 1 to 8, wherein the method further comprises:
receiving second indication information from the terminal, wherein the second indication information indicates information successfully received by the terminal and/or information not successfully received by the terminal.

10. The method according to any one of claims 6 to 8, wherein the method further comprises:
sending a first indication message to the first radio control apparatus, wherein the first indication message indicates the terminal to move from the first cell to the second cell; and
receiving a first end indication from the first radio control apparatus, wherein the first end indication indicates the first radio control apparatus to no longer send information exchanged between the first radio control apparatus and the terminal to a first access network device.

11. The method according to any one of claims 5 to 8, wherein the method further comprises:
sending a second end indication to the second access network device, wherein the second end indication indicates to no longer send the information exchanged between the first radio control apparatus and the terminal to the second access network device.

12. A model configuration method performed by a terminal, wherein the method comprises:
receiving (602), in a first cell, first-part information of a first model from a first communications apparatus, wherein the first model is an artificial intelligence, AI, model and is used by the terminal to process data; and
sending (603) first indication information to a second communications apparatus, wherein the first indication information indicates second-part information of the first model, the second-part information is information to be sent to a terminal when the terminal is located in a second cell, and the first cell and the second cell are different cells, wherein the second-part information is remaining information other than the first-part information in information about the first model.

13. The method according to claim 12, wherein the first communication apparatus is a first access network device or a first radio control apparatus; and
the second communication apparatus is a second access network device or a second radio control apparatus.

14. The method according to claim 12 or 13, wherein
the first indication information indicates an end location of the first-part information in the information about the first model; or
the first indication information comprises identification information of the terminal.

15. A communication apparatus (400), configured to perform the method according to any one of claims 1 to 11, or a terminal configured to perform the method according to any one of claims 12 to 14.

## Patentansprüche

1. Modellkonfigurationsverfahren, das durch eine erste Kommunikationsvorrichtung durchgeführt wird, wobei das Verfahren Folgendes umfasst:
Senden (501, 601, 701, 802) von Erstteilinformationen eines ersten Modells an ein Endgerät in einer ersten Zelle, wobei das erste Modell ein Modell künstlicher Intelligenz, KI, ist und vom Endgerät zum Verarbeiten von Daten verwendet wird; und
Senden (503, 703, 804) von Erstangabeinformationen, wobei die Erstangabeinformationen Zweitteilinformationens des ersten Modells angeben, die Zweitteilinformationen Informationen sind, die an das Endgerät gesendet werden sollen, wenn sich das Endgerät in einer zweiten Zelle befindet, und die erste Zelle und die zweite Zelle unterschiedliche Zellen sind, wobei die Zweitteilinformationen die übrigen Informationen sind, die nicht zu den Erstteilinformationen über das erste Modell gehören.

2. Verfahren nach Anspruch 1, wobei das Senden (503, 703, 804) der Erstangabeinformationen Folgendes umfasst:
Senden der Erstangabeinformation an eine zweite Funksteuervorrichtung.

3. Verfahren nach Anspruch 1 oder 2, wobei
die Erstangabeinformationen einen Endort der Erstteilinformationen in den Informationen über das erste Modell angeben;
die Erstangabeinformationen einen Startort der Zweitteilinformationen in den Informationen über das erste Modell angeben; oder
die Erstangabeinformationen Zweitteilinformationen umfassen.

4. Verfahren nach Anspruch 1, wobei die der ersten Zelle entsprechende Funksteuervorrichtung mit der der zweiten Zelle entsprechenden identisch ist; und
die Erstangabeinformationen Identifikationsinformationen des Endgeräts angeben;
die Erstangabeinformationen Identifikationsinformationen des Endgeräts und einen Startort von Viertteilinformationen in Drittteilinformationen angeben, wobei die Drittteilinformationen Informationen sind, die von der Funksteuervorrichtung erlangt werden, und die Viertteilinformationen Informationen sind, die nicht an das Endgerät gesendet werden und die in den Drittteilinformationen sind; oder
die Erstangabeinformationen Identifikationsinformationen des Endgeräts und einen Endort der Erstteilinformationen in den Drittteilinformationen angeben, wobei es sich bei den Drittteilinformationen um Informationen handelt, die von der Funksteuervorrichtung erlangt werden.

5. Verfahren nach Anspruch 4, wobei das Senden (503, 703, 804) der Erstangabeinformationen Folgendes umfasst:
Senden der Erstangabeinformationen an eine zweite Zugriffsnetzwerkeinrichtung; oder
Senden der Erstangabeinformationen an die Funksteuervorrichtung, wobei die Erstangabeinformationen ferner Identifikationsinformationen einer zweiten Zugriffsnetzwerkeinrichtung angeben, wobei
die zweite Zugriffsnetzwerkeinrichtung die zweite Zelle bedient.

6. Verfahren nach Anspruch 1, wobei die erste Zelle einer ersten Funksteuervorrichtung entspricht, die zweite Zelle einer zweiten Funksteuervorrichtung entspricht und die erste Funksteuervorrichtung von der zweiten Funksteuervorrichtung verschieden ist; und das Senden von Erstangabeinformationen Folgendes umfasst:
Senden der Erstangabeinformationen an eine zweite Zugriffsnetzwerkeinrichtung.

7. Verfahren nach Anspruch 6, wobei
die Erstangabeinformationen die Zweitteilinformationen umfassen;
die Erstangabeinformationen einen Startort der Zweitteilinformationen in den Informationen über das erste Modell angeben;
die Erstangabeinformationen einen Endort der Erstteilinformationen in den Informationen über das erste Modell angeben; oder
die Erstangabeinformationen Viertteilinformationen und einen Endort von Drittteilinformationen in den Informationen über das erste Modell umfassen, die Viertteilinformationen Informationen sind, die nicht an das Endgerät gesendet werden und die in den Drittteilinformationen sind, und die Dritteilinformationen Teilinformationen sind, die sich auf das erste Modell beziehen und von der ersten Funksteuervorrichtung erlangt werden.

8. Verfahren nach Anspruch 6 oder 7, wobei das Verfahren ferner Folgendes umfasst:
Senden von Paketdatenkonvergenzprotokoll-, PDCP-, Sequenznummerninformationen, die den Zweitteilinformationen entsprechen, an die zweite Zugriffsnetzwerkeinrichtung.

9. Verfahren nach einem der Ansprüche 1 bis 8, wobei das Verfahren ferner Folgendes umfasst:
Empfangen von Zweitangabeinformationen vom Endgerät, wobei die Zweitangabeinformationen vom Endgerät erfolgreich empfangene Informationen und vom Endgerät nicht erfolgreich empfangene Informationen angeben.

10. Verfahren nach einem der Ansprüche 6 bis 8, wobei das Verfahren ferner Folgendes umfasst:
Senden einer Erstangabenachricht an die erste Funksteuervorrichtung, wobei die Erstangabenachricht dem Endgerät angibt, sich von der ersten Zelle zur zweiten Zelle zu bewegen; und
Empfangen einer ersten Endangabe von der ersten Funksteuervorrichtung, wobei die erste Endangabe der ersten Funksteuervorrichtung angibt, zwischen der ersten Funksteuervorrichtung und dem Endgerät ausgetauschte Informationen nicht mehr an eine erste Zugriffsnetzwerkeinrichtung zu senden.

11. Verfahren nach einem der Ansprüche 5 bis 8, wobei das Verfahren ferner Folgendes umfasst:
Senden einer zweiten Endangabe an die zweite Zugriffsnetzwerkeinrichtung, wobei die zweite Endangabe angibt, die zwischen der ersten Funksteuervorrichtung und dem Endgerät ausgetauschten Informationen nicht mehr an die zweite Zugriffsnetzwerkeinrichtung zu senden.

12. Modellkonfigurationsverfahren, das durch ein Endgerät durchgeführt wird, wobei das Verfahren Folgendes umfasst:
Empfangen (602), in einer ersten Zelle, von Erstteilinformationen eines ersten Modells von einer ersten Kommunikationsvorrichtung, wobei das erste Modell ein Modell künstlicher Intelligenz, KI, ist und vom Endgerät zum Verarbeiten von Daten verwendet wird; und
Senden (603) von Erstangabeinformationen an eine zweite Kommunikationsvorrichtung, wobei die Erstangabeinformationen Zweitteilinformationen des ersten Modells angeben, die Zweitteilinformationen Informationen sind, die an ein Endgerät gesendet werden sollen, wenn sich das Endgerät in einer zweiten Zelle befindet, und die erste Zelle und die zweite Zelle unterschiedliche Zellen sind, wobei die Zweitteilinformationen die übrigen Informationen sind, die nicht zu den Erstteilinformationen in Informationen über das erste Modell gehören.

13. Verfahren nach Anspruch 12, wobei es sich bei der ersten Kommunikationsvorrichtung um eine erste Zugriffsnetzwerkeinrichtung oder eine erste Funksteuervorrichtung handelt; und
die zweite Kommunikationsvorrichtung eine zweite Zugriffsnetzwerkeinrichtung oder eine zweite Funksteuervorrichtung ist.

14. Verfahren nach Anspruch 12 oder 13, wobei
die Erstangabeinformationen einen Endort der Erstteilinformationen in den Informationen über das erste Modell angeben; oder
die Erstangabeinformationen Identifikationsinformationen des Endgeräts umfassen.

15. Kommunikationsvorrichtung (400), die dazu konfiguriert ist, das Verfahren nach einem der Ansprüche 1 bis 11 durchzuführen, oder ein Endgerät, das zum Durchführen des Verfahrens nach einem der Ansprüche 12 bis 14 konfiguriert ist.

## Revendications

1. Procédé de configuration de modèle réalisé par un premier appareil de communication, dans lequel le procédé comprend :
l'envoi (501, 601, 701, 802) d'informations de première partie d'un premier modèle à un terminal qui se trouve dans une première cellule, dans lequel le premier modèle est un modèle d'intelligence artificielle, IA, et est utilisé par le terminal pour traiter des données ; et
l'envoi (503, 703, 804) de premières informations d'indication, dans lequel les premières informations d'indication indiquent des informations de deuxième partie du premier modèle, les informations de deuxième partie sont des informations à envoyer au terminal lorsque le terminal se situe dans une seconde cellule, et la première cellule et la seconde cellule sont des cellules différentes, dans lequel les informations de deuxième partie sont des informations restantes autres que les informations de première partie dans les informations concernant le premier modèle.

2. Procédé selon la revendication 1, dans lequel l'envoi (503, 703, 804) de premières informations d'indication comprend :
l'envoi des premières informations d'indication à un second appareil de commande radio.

3. Procédé selon la revendication 1 ou 2, dans lequel les premières informations d'indication indiquent un emplacement final des informations de première partie dans les informations concernant le premier modèle ;
les premières informations d'indication indiquent un emplacement de départ des informations de deuxième partie dans les informations concernant le premier modèle ; ou
les premières informations d'indication comprennent les informations de deuxième partie.

4. Procédé selon la revendication 1, dans lequel un appareil de commande radio correspondant à la première cellule est identique à celui correspondant à la seconde cellule ; et
les premières informations d'indication indiquent des informations d'identification du terminal ;
les premières informations d'indication indiquent des informations d'identification du terminal et un emplacement de départ d'informations de quatrième partie dans les informations de troisième partie, dans lequel les informations de troisième partie sont des informations obtenues à partir de l'appareil de commande radio, et les informations de quatrième partie sont des informations qui ne sont pas envoyées au terminal et qui se trouvent dans les informations de troisième partie ; ou
les premières informations d'indication indiquent des informations d'identification du terminal et un emplacement final des informations de première partie dans les informations de troisième partie, dans lequel les informations de troisième partie sont des informations obtenues à partir de l'appareil de commande radio.

5. Procédé selon la revendication 4, dans lequel l'envoi (503, 703, 804) de premières informations d'indication comprend :
l'envoi des premières informations d'indication à un second dispositif de réseau d'accès ; ou
l'envoi des premières informations d'indication à l'appareil de commande radio, dans lequel les premières informations d'indication indiquent également des informations d'identification d'un second dispositif de réseau d'accès, dans lequel
le second dispositif de réseau d'accès dessert la seconde cellule.

6. Procédé selon la revendication 1, dans lequel la première cellule correspond à un premier appareil de commande radio, la seconde cellule correspond à un second appareil de commande radio, et le premier appareil de commande radio est différent du second appareil de commande radio ; et l'envoi de premières informations d'indication comprend :
l'envoi des premières informations d'indication à un second dispositif de réseau d'accès.

7. Procédé selon la revendication 6, dans lequel les premières informations d'indication comprennent les informations de deuxième partie ;
les premières informations d'indication indiquent un emplacement de départ des informations de deuxième partie dans les informations concernant le premier modèle ;
les premières informations d'indication indiquent un emplacement final des informations de première partie dans les informations concernant le premier modèle ; ou
les premières informations d'indication comprennent des informations de quatrième partie et un emplacement final d'informations de troisième partie dans les informations concernant le premier modèle, les informations de quatrième partie sont des informations qui ne sont pas envoyées au terminal et qui se trouvent dans les informations de troisième partie, et les informations de troisième partie sont des informations de partie qui sont du premier modèle et qui sont obtenues à partir du premier appareil de commande radio.

8. Procédé selon la revendication 6 ou 7, dans lequel le procédé comprend également :
l'envoi d'informations de numéro de séquence de protocole de convergence de données par paquets, PDCP, correspondant aux informations de deuxième partie au second dispositif de réseau d'accès.

9. Procédé selon l'une quelconque des revendications 1 à 8, dans lequel le procédé comprend également :
la réception de secondes informations d'indication provenant du terminal, dans lequel les secondes informations d'indication indiquent des informations reçues avec succès par le terminal et/ou des informations non reçues avec succès par le terminal.

10. Procédé selon l'une quelconque des revendications 6 à 8, dans lequel le procédé comprend également :
l'envoi d'un premier message d'indication au premier appareil de commande radio, dans lequel le premier message d'indication indique au terminal de se déplacer de la première cellule à la seconde cellule ; et
la réception d'une première indication de fin provenant du premier appareil de commande radio, dans lequel la première indication de fin indique au premier appareil de commande radio de ne plus envoyer d'informations échangées entre le premier appareil de commande radio et le terminal à un premier dispositif de réseau d'accès.

11. Procédé selon l'une quelconque des revendications 5 à 8, dans lequel le procédé comprend également :
l'envoi d'une seconde indication de fin au second dispositif de réseau d'accès, dans lequel la seconde indication de fin indique de ne plus envoyer les informations échangées entre le premier appareil de commande radio et le terminal au second dispositif de réseau d'accès.

12. Procédé de configuration de modèle réalisé par un terminal, dans lequel le procédé comprend :
la réception (602), dans une première cellule, d'informations de première partie d'un premier modèle provenant d'un premier appareil de communication, dans lequel le premier modèle est un modèle d'intelligence artificielle, IA, et est utilisé par le terminal pour traiter des données ; et
l'envoi (603) de premières informations d'indication à un second appareil de communication, dans lequel les premières informations d'indication indiquent des informations de deuxième partie du premier modèle, les informations de deuxième partie sont des informations à envoyer à un terminal lorsque le terminal se situe dans une seconde cellule, et la première cellule et la seconde cellule sont des cellules différentes, dans lequel les informations de deuxième partie sont des informations restantes autres que les informations de première partie dans les informations concernant le premier modèle.

13. Procédé selon la revendication 12, dans lequel le premier appareil de communication est un premier dispositif de réseau d'accès ou un premier appareil de commande radio ; et
le second appareil de communication est un second dispositif de réseau d'accès ou un second appareil de commande radio.

14. Procédé selon la revendication 12 ou 13, dans lequel les premières informations d'indication indiquent un emplacement final des informations de première partie dans les informations concernant le premier modèle ; ou
les premières informations d'indication comprennent des informations d'identification du terminal.

15. Appareil de communication (400), configuré pour réaliser le procédé selon l'une quelconque des revendications 1 à 11, ou un terminal configuré pour réaliser le procédé selon l'une quelconque des revendications 12 à 14.
